# EUROPÄISCHE PATENTSCHRIFT

(11) **EP 4 308 344 B1**
(45) Veröffentlichungstag und Bekanntmachung des Hinweises auf die Patenterteilung: **23.07.2025**
(21) Anmeldenummer: 22712936.8
(22) Anmeldetag: 14.03.2022
(51) Int. Cl.: B25B 27/10, H01R 43/048, B21D 39/04

(54) **PRESSBACKE, ANTRIEBSPRESSBACKE, PRESSEINSATZ UND SYSTEM FÜR EIN VERPRESSEN VON FITTINGS MIT ROHREN**
CRIMPING DIE, DRIVEN CRIMPING DIE, PRESS INSERT AND SYSTEM FOR PRESSING FITTINGS WITH TUBES
MÂCHOIRE DE PRESSE, MÂCHOIRE DE PRESSE D'ENTRAÎNEMENT, INSERT DE PRESSE ET SYSTÈME POUR UNE COMPRESSION DES RACCORDS AVEC DES TUBES

(30) Priorität: 17.03.2021 EP 21163134
(43) Veröffentlichungstag der Anmeldung: 24.01.2024
(73) Patentinhaber: Viega Technology GmbH & Co. KG, 57439 Attendorn (DE)
(72) Erfinder: ROSENTHAL, Jörg, 51580 Reichshof-Eckenhagen (DE)
(74) Vertreter: Cohausz & Florack
(86) Internationale Anmeldenummer: PCT/EP2022/056505
(87) Internationale Veröffentlichungsnummer: WO 2022/194761

(56) Entgegenhaltungen:
- EP-A1- 3 381 618
- DE-A1- 102007 047 339
- DE-A1- 102014 109 749
- DE-U1- 202005 008 125

## Beschreibung

Die Erfindung betrifft eine Pressbacke für ein Verpressen von Fittings mit Rohren mit einem Presseinsatz und mit einer Antriebspressbacke sowie ein System für ein Verpressen von Fittings mit Rohren, mit mindestens zwei Presseinsätzen und mit einer Antriebspressbacke.

Die Erfindung betrifft auch eine Antriebspressbacke für ein Verpressen von Fittings mit Rohren mittels eines Presseinsatzes, mit zwei Antriebspressbackenhälften, mit Gelenkelementen zum Verbinden der Antriebspressbackenhälften, mit Kopplungselementen zum lösbaren Verbinden mit einem Presseinsatz und mit Kraftübertragungselementen.

Die Erfindung betrifft auch einen Presseinsatz für ein Verpressen von Fittings mit Rohren, mit mindestens zwei Presssegmenten, mit in den Presssegmenten ausgebildeten Presskonturen, mit Gelenkmitteln zum Verbinden der Presssegmente, mit Kopplungsmitteln zum lösbaren Verbinden mit einer Antriebspressbacke und mit Kraftübertragungsmitteln. Jeweils mindestens zwei Presssegmente werden dabei als Teile einer Pressbacke zum Verpressen der Fittings genutzt.

Schließlich betrifft die Erfindung auch ein System für ein Verpressen von Fittings mit Rohren, mit mindestens zwei Presseinsätzen und mit einer Antriebspressbacke.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases, ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um einen Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels einer Pressbacke radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielweise metallisch dichtend ausgebildet sein.

Als Presstechnik für ein radiales Umformen des Pressabschnittes kommen vorwiegend radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Als Materialien für starre Rohre kommen einerseits feste und hochfeste Werkstoffe, insbesondere metallische Werkstoffe oder harte Kunststoffe in Frage. Starre Rohre werden bevorzugt bei einer Installation mit größeren geraden Abschnitten entlang von Wänden oder Decken oder innerhalb von Wand- oder Deckenkonstruktionen eingesetzt.

Dagegen werden flexible Rohre in den Installationen eingesetzt, insbesondere Kunststoffrohre, sogenannte Vollkunststoffrohre, oder Rohre aus Verbundmaterialien, sogenannte Mehrschichtverbundrohre, bestehend aus einer oder mehreren Lagen aus Kunststoff und einer oder mehreren dünnen Lagen aus Metall. Flexible Rohre werden insbesondere für die Installation von Vorwandtechnik wie nachträglich einzubauende Sanitärinstallationen eingesetzt, bei denen auf engem Raum die flexiblen Rohre oftmals vor Ort zurecht gebogen werden und in gekrümmtem Zustand verbaut werden.

Weiterhin liegen die starren Rohre und die flexiblen Rohre in diversen Außendurchmessern vor. Bei Metallrohren werden insbesondere Außendurchmesser im Bereich von 6 mm - 108 mm und größer bis ca. 150 mm entsprechend 6 Zoll eingesetzt. Bei Kunststoffrohren liegen die Außendurchmesser üblicher Weise im Bereich von 6 mm - 63 mm, wobei auch hier deutlich größere Außendurchmesser zum Einsatz kommen.

Starre Rohre und flexible Rohre unterscheiden sich unabhängig von Materialeigenschaft und Dimensionierung des Rohres dadurch, dass ein starres Rohr durch ein außen abdichtendes Fitting verbunden werden kann, während ein flexibles Rohr nur durch ein innen abdichtendes Fitting verbunden werden kann. Wegen der starren Eigenschaft ist die Formstabilität des starren Rohres ausreichend groß, um beim radialen Verpressen die auftretenden Kräfte aufzunehmen und die abdichtende und haltende bzw. fixierende Funktion zusammen mit dem verpressten Fitting zu gewährleisten. Flexible Rohre werden dagegen durch eine Stützhülse von innen gestützt und auf die Stützhülse bei Verpressen des Fittings aufgeformt. Fittings für starre Rohre sind daher außen abdichtende Fittings und Fittings für flexible Rohre sind innen abdichtende Fittings.

Beim Verlegen eines Rohrleitungssystems, bei denen sowohl starre Rohre als auch flexible Rohre zum Einsatz kommen, werden zueinander passende Rohrabmessungen für Innen- und Außendurchmesser ausgewählt. Die exakten Werte passen dann paarweise gegebenenfalls nur zufällig überein, passende Abmessungen werden also mit möglichst guter Übereinstimmung ausgewählt. In Kombination mit den spezifischen Fittings für starre Rohre und flexible Rohre existieren somit in der Regel spezifische Fittinggeometrien und Pressbackengeometrien für jedes System bzw. Abmessung.

Daher müssen auf einer Baustelle für verschiedene Rohrleitungen und Fittings verschiedene Pressbacken bereitgehalten werden. Insbesondere der baustellenseitige Aufwand ist groß, da eine Mehrzahl von Pressbacken, die mit einem Presswerkzeug angetrieben werden, oder ggf. sogar verschiedene Presswerkzeuge vorgehalten werden müssen. Hierdurch entsteht eine sehr große Produktvielfalt und der dazu gehörigen Produktion, Lagerung und Logistik und damit verbundene hohe Anschaffungskosten für den Anwender.

Verschiedene Arten von Pressbacken werden eingesetzt. Zum einen sind Pressbacken bekannt, die jeweils eine Presskontur aufweisen. Diese werden auch Standardpressbacken genannt und haben als Set für mehrere Presskonturen ein erhebliches Gewicht.

Zum anderen sind Systeme für ein Verpressen von Fittings mit Rohren bekannt, die mindestens zwei Presseinsätze, in der Regel aber einen ganzen Satz von Presseinsätzen aufweisen, mit denen unterschiedliche Fittings mit entsprechenden Presskonturen verpresst werden können. Die Presseinsätze werden paarweise mit der Antriebspressbacke gekoppelt, um danach für ein Verpressen eines Fittings eingesetzt zu werden. Ein Satz von Presseinsätzen für beispielsweise sechs Press-Dimensionen mit Außenabmessungen von 12, 15, 18, 22, 28 und 35mm bzw. sechs Paare von Einzelpresseinsätzen gehören zusammen mit der Antriebspressbacke zum System. Dadurch wird zu einem gewissen Teil Gewicht gegenüber Standardpressbacken eingespart, da nur eine Antriebspressbacke notwendig ist.

Die einzelnen Presseinsätze sind zudem in der Regel nicht miteinander verbunden und können daher vertauscht werden, so dass verschiedene Pressbacken mit unterschiedlichen Presskonturen mit der Antriebspressbacke gekoppelt und eingesetzt werden. Fehlpressungen der Fittings sind dann die Folge. Ebenso können die Presseinsätze einfacher verloren gehen, so dass Paare von Pressbacken auseinander fallen. Weiterhin sind die Presseinsätze von Wechselpressbacken in der Regel schwierig zu greifen. Zudem kommt es oft zu einem Vertauschen der Pressbacken.

Weiterhin sind die Außenabmessungen der Pressbacken der Antriebspressbacke auf die größte Pressdimension ausgelegt. Demgegenüber sind die Außenabmessungen einer Standard-Pressbacke in der Regel auf die jeweilige Pressdimension optimiert, so dass die Abmessungen und das Gewicht möglichst klein sind. Entsprechend sind die Pressbacken der Antriebspressbacke für kleinere Pressdimensionen hinsichtlich der Abmessungen überdimensioniert. Zugleich ist die Zugänglichkeit zur Pressstelle eingeschränkt und das Gesamtgewicht der Pressbacke mit auswechselbaren Presseinsätzen gegenüber einer Standard-Pressbacke größer.

In der Regel erfordern die Lade-Mechanismen der bekannten Systeme zum Tausch der Presseinsätze eine Zwei-Hand-Bedienung und beinhalten zwei Arbeitsschritte. Dieses erschwert den Umgang mit den Presssystemen. Dabei schwächen die Kopplungsmechanismen bei gleichem Bauraum die Konstruktion im direkten Vergleich zur Standard-Pressbacke. Bei gleicher Festigkeit ist die Wechselpressbacke schwerer und größer als die Standard-Pressbacke.

Darüber hinaus sind Pressschlingen aus zwei oder mehr Presssegmenten bekannt, die um den zu verpressenden Bereich des Fittings gelegt und mittels einer Zugbacke am offenen Ende zusammengepresst werden, um damit das Fitting zu verpressen. Dazu weist die Pressschlinge an beiden Presssegmenten bzw. an den beiden äußeren Presssegmenten eine Vertiefung auf, in die die Zugbacke eingreift und die Pressschlinge in den geschlossenen Zustand zieht. Dadurch wird mittels der Pressschlinge das Fitting verpresst. Pressschlingen werden oft in schwer unzugänglichen Bereichen der Installation eingesetzt, beispielsweise in Raumecken, wenn ein Ansetzen einer Pressbacke erschwert oder unmöglich ist. Die Zugbacke kann dann mit einem größeren Abstand zum Fitting bedient werden, ohne selbst das Fitting umgreifen zu müssen.

Die Pressschlingen müssen ebenfalls für alle Press-Dimensionen vorgehalten werden, wodurch der Aufwand auf einer Baustelle weiter vergrößert wird. Die DE 10 2007 047 339 A1 offenbart eine Pressbacke für ein Verpressen von Fittings mit Rohren. Der Presseinsatz wird über eine Federeinrichtung lösbar mit der Antriebspressbacke gekoppelt, wobei die Kopplungselemente gegenüberliegend auf den Pressbackenhälften, überwiegend in der Mitte der Presskontur, zwischen der Eintrittsöffnung und den Gelenkmitteln der Pressbacke angeordnet sind. Der Kopplungsmechanismus erfordert eine Zwei-Hand-Bedienung zum Tausch der Presseinsätze. Die Pressflächen sind an mit den Kopplungselementen übereinstimmenden Positionen angeordnet. Durch diese Anordnung werden im Pressvorgang überwiegend vertikale Kraftkomponenten von der Antriebspressbacke auf den Presseinsatz übertragen, wodurch ein Lösen des Presseinsatzes aus der Pressbacke verhindert wird.

Aus der EP 3 381 618 A1 und DE 20 2005 008125 U1 sind weiterhin Pressmittel für eine Anwendung als Pressschlinge mit einem geeigneten Werkzeug bekannt.

Ziel der vorliegenden Erfindung ist es daher, das Gesamtgewicht eines Systems für ein Verpressen von Fittings mit Rohren weiter zu reduzieren und einen komfortablen Ein-Hand-Wechsel der Presseinsätze an der Antriebspressbacke zu ermöglichen. Zudem soll ein Mehrfachnutzen der Presseinsätze erzielt werden, um die Funktionalität des Systems und seiner Komponenten zu erweitern.

Daher liegt der vorliegenden Erfindung das technische Problem zugrunde, die Handhabung und die Einsatzmöglichkeiten der Pressbacke, der Antriebspressbacke, des Presseinsatzes und des Systems für ein Verpressen von Fittings mit Rohren weiter zu verbessern.

Das oben aufgezeigte technische Problem wird erfindungsgemäß gemäß einer ersten Lehre durch eine Pressbacke für ein Verpressen von Fittings mit Rohren gelöst mit einem Presseinsatz und mit einer Antriebspressbacke, wobei der Presseinsatz aufweist: mindestens zwei Presssegmente, eine in den Presssegmenten ausgebildete Presskontur, Gelenkmittel zum Verbinden der Presssegmente, Kopplungsmittel zum lösbaren Verbinden mit der Antriebspressbacke und Kraftübertragungsmittel, wobei die Antriebspressbacke aufweist: zwei Antriebspressbackenhälften, Gelenkelemente zum Verbinden der Antriebspressbackenhälften, Kopplungselemente zum lösbaren Verbinden mit dem Presseinsatz und Kraftübertragungselemente, wobei die Gelenkmittel den Presseinsatz mit der Antriebspressbacke verschwenkbar verbinden und wobei die Kraftübertragungsmittel und die Kraftübertragungselemente zumindest überwiegend, vorzugsweise vollständig in einem Bereich zwischen der Mitte der Presskontur und den Gelenkmitteln angeordnet sind.

Bei der erfindungsgemäßen Pressbacke ist der Presseinsatz mittels der Kopplungsmittel mit den Kopplungselementen der Antriebspressbacke verbunden und durch eine Bewegung der Antriebspressbacke wird der Presseinsatz betätigt.

Der Bereich zwischen der Mitte der Presskontur und den Gelenkmitteln kann folgender Maßen beschrieben werden: bei einer Betrachtung der Pressbacke in einer Seitenansicht ist die Pressbacke horizontal ausgerichtet, der Antrieb des Presswerkzeugs verläuft horizontal. Die Achse der Presskontur steht senkrecht zur Seitenansicht, wobei die Mitte der Presskontur vorzugsweise der Achse der Presskontur entspricht und somit der Achse des zu verbindenden Rohres. Die Ausrichtung der Achse der Gelenkmittel des Presseinsatzes steht ebenfalls senkrecht zur Seitenansicht. Der Bereich zwischen der Mitte der Presskontur und den Gelenkmitteln entspricht dann dem Raum zwischen einer sich senkrecht zur Achse der Presskontur und senkrecht zur horizontalen Richtung erstreckenden Ebene und einer sich senkrecht zur Achse der Gelenkmittel und senkrecht zur horizontalen Richtung erstreckenden Ebene.

Bei dieser Ausgestaltung der Pressbacke verläuft die Krafteinleitung durch die beiden Kraftübertragungselemente in den Presseinsatz nicht entgegengesetzt und parallel, sondern im Winkel zueinander. Die Kräfte heben sich daher nicht gegeneinander auf und es entsteht eine Kraftresultierende als lineare Kraftkomponente.

Die Kraftübertragungsmittel und die Kraftübertragungselemente erzeugen gemeinsam eine den Presseinsatz zusammendrückende Kraft, die von der Position der Gelenkmittel aus in Richtung weg von der Antriebspressbacke gerichtet ist. Bei einer Aufteilung der Kraft in eine vertikale auf die Mitte der Presskontur gerichtete Komponente und eine horizontale Komponente senkrecht dazu weist die resultierende Kraft eine horizontale Komponente ungleich null auf, die vorzugsweise horizontal weg von den Gelenkmitteln gerichtet ist.

Daher ist der Presseinsatz gegenüber der Antriebspressbacke gelagert gehalten, um die Krafteinwirkung der Kraftresultierenden ausgleichen zu können. Die Antriebspressbacke muss daher den Presseinsatz nicht mehr weitgehend umgreifen, so dass die Antriebspressbacke insgesamt weniger Volumen einnimmt, ein geringeres Gewicht aufweist und handlicher zu bedienen ist.

In bevorzugter Weise sind die Kraftübertragungsmittel und die Kraftübertragungselemente jeweils als Anlageflächen ausgebildet. Dadurch wird eine flächige Kraftübertragung unabhängig von der Kopplung der Presseinsätze mit den Antriebspressbackenhälften der Antriebspressbacke verwirklicht, die den Anpressdruck gleichmäßig verteilt. Auch wenn die Kopplungsmittel wegen des mechanischen Kontaktes ebenfalls eine Kraft übertragen können, wird durch die Trennung der Kopplungselemente und der Kraftübertragungselemente auch eine weitgehende Trennung der Funktionen der Kopplung und der Kraftübertragung erreicht.

Die Anlageflächen weisen dabei bevorzugt paarweise einen Winkel α größer 10°, vorzugsweise größer als 25°, insbesondere größer als 40° zueinander auf. Als ein optimaler Winkel hat sich ein Winkel α größer 80° herausgestellt. Die Anlageflächen sind dazu vorzugsweise eben ausgestaltet, so dass ihnen eine Ebene zugeordnet werden kann. Alternativ können die Anlageflächen rund oder gebogen ausgebildet sein, wobei den Anlageflächen dann ein mittlerer ebener Verlauf zugeordnet werden kann, beispielsweise durch Bildung einer an den Endpunkten der Anlageflächen angeordneten Ebene oder einer an einer mittleren Position der Anlageflächen angeordneten tangentialen Ebene senkrecht zu einer Flächennormalen. Der Winkel wird zwischen den Ebenen der Anlageflächen der Presssegmente bzw. der beiden Antriebsbackenhälften gemessen, wobei ein Winkel von 0° parallel zueinander verlaufende Ebenen bedeutet.

Sind die Anlageflächen vorzugsweise eben ausgestaltet, ergibt sich eine größere senkrecht zur Richtung der Kraftübertragung durch die Antriebspressbacke auf den Presseinsatz orientiert Fläche, so dass die Kraftübertragung effektiver gestaltet werden kann. Sind die Außenseiten der Presssegmente und/oder die Anlageflächen vorzugsweise rund ausgestaltet, so dass die Außenseiten der beiden Presssegmente in geschlossenem Zustand des Presseinsatzes zumindest abschnittsweise auf dem Radius eines gemeinsamen Kreises liegen, wird der Vorgang des Koppelns des Presseinsatzes mit der Antriebspressbacke vereinfacht.

Es gibt verschiedene Möglichkeiten der Anordnung der Achsen bzw. Drehachsen der verschiedenen Elemente der Pressbacke. Bei einer bevorzugten Ausgestaltung der Pressbacke sind der Presseinsatz und die Antriebspressbackenhälften um eine gleiche Achse verschwenkbar angeordnet. Somit drehen sich sowohl die beiden Presssegmente des Presseinsatzes als auch die beiden Antriebspressbackenhälften um die gleiche Achse, die Gelenkmittel und die Gelenkelemente sind also auf der gleichen Achse dreh- und schwenkbar angeordnet. Bei diesem Aufbau der Pressbacke werden bei einer Drehung der Antriebspressbacken die Presssegmente des Presseinsatzes zu einer Schwenkbewegung um die gleiche Achse angetrieben, so dass die Anlageflächen von Antriebspressbacke und Presssegment während der Drehung nicht gegeneinander verschoben werden.

Bei einer alternativen Ausgestaltung der Pressbacke sind der Presseinsatz und die Antriebspressbackenhälften um verschiedene Achsen verschwenkbar, wobei die Antriebspressbackenhälften eine gleiche Achse oder unterschiedliche Achsen aufweisen können. Somit wird eine Ausgestaltung mit zwei oder drei Achsen ermöglicht, deren Positionen zueinander im Hinblick auf die geometrischen und/oder krafttechnischen Eigenschaften hin optimiert werden können.

Für diese Ausgestaltung der Pressbacke ist es weiterhin bevorzugt, dass die Gelenkmittel als ein jeweils zwei Presssegmente lagernder Hohlbolzen ausgebildet sind. Die beiden Presssegmente sind auf dem Hohlbolzen angeordnet und gleiten über dessen Oberfläche während einer Drehung ab. Die Eigenschaft als Hohlbolzen ermöglicht die Verwendung eines Verriegelungsbolzens der Antriebspressbacke, indem der Verriegelungsbolzen in den Hohlbolzen eingeschoben und darin angeordnet wird.

Weiterhin ist es bevorzugt, dass die Gelenkelemente der Antriebspressbacke einen beide Antriebspressbackenhälften verbindenden Hohlbolzen aufweisen. Die beiden Antriebspressbackenhälften weisen beispielsweise beidseitig Laschen auf, die jeweils mit dem Hohlbolzen verbunden sind und bei der Schwenkbewegung auf dem Hohlbolzen abgleiten. Da der Hohlbolzen durchgängig ist, weisen in dieser Ausgestaltung die Antriebspressbackenhälften eine Achse auf, die von Achse des Presseinsatzes versetzt angeordnet ist.

In bevorzugter Weise weisen die Gelenkelemente der Antriebspressbacke zwei Hohlbolzen auf, wobei die Hohlbolzen beidseitig jeweils mit einer Haltelasche verbunden sind und wobei die Hohlbolzen die Antriebspressbackenhälften um die gemeinsame Achse verschwenkbar lagern. Die Hohlbolzen nehmen dabei jeweils auf einer Seite die Laschen der Antriebspressbackenhälften auf. Zusätzlich können die Hohlbolzen im Bereich zwischen den Haltelaschen beabstandet zueinander angeordnet sein, so dass im Zwischenraum zwischen den beiden Hohlbolzen der Antriebspressbacke der Hohlbolzen des Presseinsatzes angeordnet werden kann. Somit sind sowohl die Presssegmente des Presseinsatzes als auch die Antriebspressbackenhälften der Antriebspressbacke auf einer gemeinsamen Achse angeordnet. Da sich beide Teile um die gleiche Achse drehen, kann der Pressprozess mit einer Kraftübertragung mittels flächiger Kraftübertragungsmittel und Kraftübertragungselemente ohne ein Gleiten der Flächen und somit ohne Reibungsverluste durchgeführt werden.

In weiter bevorzugter Weise ist der jeweils zwei Presssegmente des Presseinsatzes lagernde Hohlbolzen zwischen den beiden die Antriebspressbackenhälften der Antriebspressbacke lagernden Hohlbolzen angeordnet. Ein Verriegelungsbolzen ist zudem bevorzugt in den Hohlbolzen als gemeinsame Schwenkachse angeordnet. Werden die Antriebspressbackenhälften der Antriebspressbacke durch eine Pressvorrichtung zu einer Schwenkbewegung angetrieben, so übertragen sie die Presskraft auf die Presssegmente des Presseinsatzes, wobei das Verschwenken um die gleiche gemeinsame Achse effektiv und ohne Reibungsverluste durch aufeinander abgleitende Kraftübertragungsflächen durchgeführt wird.

Die Hohlbolzen der Antriebspressbackenhälften der Antriebspressbacke können sowohl in der Pressbackenaufnahme an den Haltelaschen oder in den Antriebspressbackenhälften der Antriebspressbacke befestigt sein. Im letzteren Fall sind die Hohlbolzen in der Antriebspressbacke tauschbar.

Somit entspricht das Betätigungsverhalten der gekoppelten Anordnung der Pressbacke gleich der Standard-Pressbacke. Die Synchronisierung der Drehbewegung beider Antriebspressbackenhälften der Antriebspressbacke und der Presssegmente des Presseinsatzes ist durch die ein gemeinsames Gelenk aufweisende Verbindung gegeben.

Die Kopplungsmittel und die Kopplungselemente können sowohl einen Formschluss als auch einen Kraftschluss ermöglichen. Ein Formschluss kann durch die nachfolgend beschriebene Ausgestaltung als T-Nut und Kopfstift oder als Kopplungsstift und eine Ausnehmung realisiert werden. Der Kraftschluss kann beispielsweise durch eine Anordnung von Magneten erfolgen, die vorzugsweise eine auf die zu erzielende Position zentrierende anziehende Kraft ausüben.

Für einen Formschluss weisen in bevorzugter Weise bei einer ersten Ausgestaltung die Kopplungsmittel Kopplungsstifte mit Kopfenden auf, wobei die Kopplungselemente teilweise geöffnete T-Nuten aufweisen und die Kopplungsmittel aufnehmen.

Dazu weisen die T-Nuten an der offenen Seite zu beiden Seitenwänden hin Hinterschneidungen auf, so dass sich eine Schiene ergibt. Die Kopplungsmittel eines Presseinsatzes in Form eines Kopfstiftes können dann in die T-Nut eingreifen und darin verschoben werden, ohne dass der Kopfstift außer Eingriff gelangt. Zudem können die Kopplungsmittel so ausgestaltet sein, dass im verbundenen Zustand ein mechanisches Spiel zwischen den Kopplungsmitteln und den Kopplungselementen vorhanden ist. In dieser Ausgestaltung sind der Presseinsatz und die Antriebspressbacke miteinander gekoppelt, aber gleichzeitig leicht verschiebbar oder verschwenkbar zu koppeln und gegebenenfalls für ein Gleiten beim Pressvorgang geeignet.

Dazu weisen die Kopfenden einen Radius größer als der Radius des Stiftabschnitts auf. Der Kopplungsstift ist dadurch geeignet, eine hinterschnittene Ausbildung eines Kopplungselements der Antriebsbacke zu hintergreifen. Eine solche hinterschnittene Ausbildung wird durch die teilweise offene T-Nut der Kopplungselemente der Antriebsbacke verwirklicht, mit der jeweils ein Kopplungsstift mit seinem Kopfende verschiebbar in Eingriff gebracht werden kann.

Unter einer T-Nut wird dabei eine Nut verstanden, die im Querschnitt einen rechteckigen Abschnitt entsprechend des T-Querbalkens und einen dagegen engeren nach unten offenen Abschnitt entsprechend des senkrechten T-Strichs aufweist. Die Richtungen unten und oben sind dabei nur beispielhaft gewählt, um einen Vergleich mit den Buchstaben "T" zu ziehen.

Der Kopf des Kopfstiftes ist in dem rechteckigen Abschnitt des T-Querbalkens angeordnet und der Stiftabschnitt des Kopfstiftes verläuft in dem senkrechten T-Strich. Der Kopf und der Querbalken führen dann zu einer Kopplung im Wesentlichen senkrecht zur Ausrichtung des T-Querbalkens, die nur durch ein Verschieben längs der zu beiden Seiten offenen Nut gelöst werden kann.

In einer zweiten Ausführungsform der Pressbacke weisen für einen Formschluss die Kopplungselemente Kopplungsstifte auf und weisen die Kopplungsmittel Ausnehmungen auf und nehmen die Kopplungselemente auf.

Dazu weisen die Kopplungselemente bevorzugt Kopplungsstifte in Form eines Vollzylinders mit konstantem Radius auf und die Ausnehmungen sind derart geformt, dass die Kopplungselemente durch Anlage in die Ausnehmungen eingreifen, so dass Antriebspressbacke und Presseinsatz mithilfe der Kopplungselemente und Kopplungsmittel lösbar verbunden sind. Die Kopplungsstifte sind bevorzugt an zwei sich gegenüberliegenden Innenseiten der Antriebspressbackenhälften der Antriebspressbacke vorgesehen.

Die als Kopplungsmittel dienenden Ausnehmungen können an zwei sich gegenüberliegenden Stellen an den Außenseiten der Presssegmente des Presseinsatzes, vorzugsweise vollständig in einem Bereich zwischen der Mitte der Presskontur des Presseinsatzes und den Gelenkmitteln des Presseinsatzes, besonders bevorzugt in einer Richtung senkrecht zur horizontal ausgerichteten Antriebspressbacke mit verbundenem Presseinsatz über und unter den Gelenkmitteln des Presseinsatzes, angeordnet sein.

Bevorzugt ergibt sich durch die Ausgestaltung der Ausnehmungen ein Vorsprung, den die Kopplungsstifte beim Kopplungsvorgang des Presseinsatzes mit der Antriebspressbacke hintergreifen, die Kopplungsstifte liegen an dem Vorsprung an und passen formschlüssig in die durch die Ausnehmungen geformte Nuten.

Durch diese Ausgestaltung der Kopplungselemente und Kopplungsmittel kann die Anzahl der zu produzierenden Teile eines Systems für ein Verpressen reduziert werden, da die Kopplungsstifte nur in der Antriebspressbacke vorgesehen sind und die verschiedenen Presseinsätze bzw. der Zugeinsatz lediglich Ausnehmungen aufweisen. Diese Art eines Systems ist mechanisch einfacher herstellbar. Zusätzlich ergeben sich durch eine Reduzierung der aus der Bauteil-Silhouette hervorstehenden Elemente Vorteile bei der Handhabung des Presswerkzeugs. Das Presswerkzeug und die einzelnen Teile des Systems sind angenehmer zu greifen und bieten weniger Potential zum Verhaken in der Kleidung eines Bedieners.

Wie oben beschrieben worden ist, kann die Antriebspressbacke beidseitig angeordnete Haltelaschen aufweisen, um die einzelnen Komponenten zusammen zu halten und zu tragen. Damit kann auch ein Antriebsmechanismus verbunden sein, insbesondere ausgestaltet als Doppelrollenstößel mit zwei Rollen, um eine Wirkverbindung mit einem, insbesondere hydraulisch oder elektrisch arbeitendes, Presswerkzeug zu bilden. Der Antrieb der Antriebspressbackenhälften kann aber auch durch einen Kniehebel realisiert sein.

Der Presseinsatz kann darüber hinaus auch eine Feder aufweisen, die vorzugsweise als Drehfeder ausgebildet ist und die Presssegmente des Presseinsatzes zusammendrückt. Die Feder bewirkt dann, wenn die Presssegmente des Presseinsatzes mit den Antriebspressbackenhälften der Antriebspressbacke gekoppelt sind, ebenfalls ein Zusammendrücken der Antriebspressbackenhälften der Antriebspressbacke. Dadurch wird die Montage der Pressbacke bestehend aus Antriebspressbacke und Presseinsätzen auf einem Fitting erleichtert. Zur Unterstützung dieser Bewegung kann eine solche Feder auch in der Antriebspressbacke vorgesehen sein.

Zum Koppeln des Presseinsatzes mit der Antriebspressbacke kann dieser in leicht geschwenkter Lage mit den Antriebspressbackenhälften der Antriebspressbacke zusammengeführt werden, wobei die Kopplungsmittel, insbesondere die Kopplungsstifte in die Öffnungen der Kopplungselemente, insbesondere der T-Nuten eingreifen. Durch das Zurückdrehen des Presseinsatzes greifen die Kopplungsstifte in den Hinterschnitt der T-Nuten. Ist dann beispielsweise die Öffnung des Hohlbolzens des Presseinsatzes deckungsgleich mit dem in einem der Hohlbolzen der Antriebspressbacke angeordneten Verriegelungsbolzen, so kann der Verriegelungsbolzen eingeschoben werden.

Der gleiche Kopplungsvorgang lässt sich auch mit der Ausgestaltung der Kopplungsmittel als Ausnehmung und der Kopplungselemente als Stift realisieren.

Grundsätzlich kann die Pressbacke mit einer der nachfolgend beschriebenen Ausgestaltungen des Presseinsatzes und/oder mit einer der nachfolgend beschriebenen Ausgestaltungen der Antriebspressbacke eingesetzt werden.

Das oben aufgezeigte technische Problem wird gemäß einer zweiten Lehre durch eine Antriebspressbacke für ein Verpressen von Fittings mit Rohren mittels eines Presseinsatzes gelöst mit zwei Antriebspressbackenhälften, mit Gelenkelementen zum Verbinden der Antriebspressbackenhälften, mit Kopplungselementen zum lösbaren Verbinden mit einem Presseinsatz und mit Kraftübertragungselementen, wobei die Gelenkelemente ein Verschwenken der Antriebspressbackenhälften um eine gemeinsame Achse oder um zwei verschiedene Achsen ermöglichen, wobei Verbindungselemente zum verschwenkbaren Verbinden des Presseinsatzes vorgesehen sind und wobei die Kraftübertragungselemente zumindest überwiegend, vorzugsweise vollständig in einem Bereich zwischen der Mitte der Presskontur des zu verbindenden Presseinsatzes und den Gelenkmitteln des zu verbindenden Presseinsatzes angeordnet sind.

Die bereits für die Pressbacke beschriebenen Vorteile der verschiedenen bevorzugten Ausgestaltungen gelten für die Antriebspressbacke in gleicher Weise, so dass auf die vorigen Ausführungen an den entsprechenden Stellen verwiesen wird.

In bevorzugter Weise sind die Kraftübertragungselemente als Anlageflächen ausgebildet sind und die Anlageflächen weisen einen Winkel α größer 10°, vorzugsweise größer als 25°, insbesondere größer als 40°, besonders bevorzugt größer als 80° zueinander auf.

Weiterhin können die Verbindungselemente und die Gelenkelemente eine gleiche Achse bzw. Drehachse aufweisen.

Alternativ können die Verbindungselemente und die Gelenkelemente verschiedene Achsen aufweisen, wobei die Gelenkelemente ein Verschwenken der Antriebspressbackenhälften um eine gemeinsame Achse oder um verschiedene Achsen ermöglichen.

Des Weiteren können die Kopplungselemente zur lösbaren Aufnahme von Kopplungsmitteln des Presseinsatzes teilweise geöffnete T-Nuten aufweisen und die Kraftübertragungselemente können als Anlageflächen ausgebildet sein. Somit ermöglichen die Kopplungselemente ein verschwenkbares Halten des Presseinsatzes.

Alternativ können die Kopplungselemente Kopplungsstifte aufweisen. Die Kopplungsstifte können somit mit entsprechend ausgestalteten Kopplungsmitteln eines Presseinsatzes in Eingriff kommen und ein verschwenkbares Halten des Presseinsatzes ermöglichen.

Zudem kann eine Feder, insbesondere Drehfeder in der Antriebspressbacke angeordnet sein, die die Antriebspressbackenhälften zusammenzieht.

Auch eine Ausgestaltung der Gelenkelemente mit mindestens einem beide Antriebspressbackenhälften verbindenden Hohlbolzen kann vorgesehen sein. Dabei können die Hohlbolzen jeweils mit einer Haltelasche der Antriebspressbacke verbunden sein. Zudem können die Hohlbolzen die Antriebspressbackenhälften um die gemeinsame Achse verschwenkbar lagern und gegebenenfalls können die Hohlbolzen im Bereich zwischen den Haltelaschen beabstandet zueinander angeordnet sein.

Diese Antriebspressbacke dient also nicht unmittelbar als Pressbacke, sondern überträgt eine Presskraft auf den damit verbundenen Presseinsatz. Die Ausgestaltung der Kopplungselemente ist an die Kopplungsmittel des Presseinsatzes angepasst und ermöglicht eine lösbare Verbindung. Dabei sind die Funktionen der Kopplung und der Kraftübertragung weitgehend voneinander getrennt, so dass für beide Funktionalitäten eine besondere Ausgestaltung möglich ist.

Dazu können die Kopplungselemente teilweise geöffnete T-Nuten aufweisen. Dazu weisen die T-Nuten an der offenen Seite zu beiden Seitenwänden hin Hinterschneidungen auf, so dass sich eine Schiene ergibt. Die Kopplungsmittel eines Presseinsatzes in Form eines Kopfstiftes können dann in die T-Nut eingreifen und darin verschoben werden, ohne dass der Kopfstift außer Eingriff gelangt. Alternativ können Kopplungsstifte und Ausnehmungen der oben beschriebenen Art vorgesehen sein.

Die Antriebspressbacke weist weiterhin eine gemeinsame Haltestruktur auf, die bevorzugt als beidseitig angeordnete Haltelaschen zum Halten und Verbinden der Antriebspressbackenhälften und der Presssegmente des Presseinsatzes ausgebildet sind.

Die Kopplungselemente sind darüber hinaus so ausgebildet, dass sie zu einem Teil ein verschwenkbares Halten des Presseinsatzes ermöglichen. Dazu wird das Gelenkmittel des Presseinsatzes mit der Antriebspressbacke, vorzugsweise mit den beschriebenen Laschen verschwenkbar verbunden. Durch das dreh- und schwenkbare Verbinden des Presseinsatzes wird ein Teil der Kopplung bewirkt.

Weiterhin ist es bevorzugt, dass die Gelenkelemente der Antriebspressbacke einen beide Antriebspressbackenhälften verbindenden Hohlbolzen aufweisen. Die beiden Antriebspressbackenhälften weisen beidseitig Laschen auf, die jeweils mit dem Hohlbolzen verbunden sind und bei der Schwenkbewegung auf dem Hohlbolzen abgleiten. Da der Hohlbolzen durchgängig ist, weisen in dieser Ausgestaltung die Antriebspressbackenhälften eine Schwenkachse auf, die von Achse des Presseinsatzes versetzt angeordnet ist.

In bevorzugter Weise weisen die Gelenkelemente der Antriebspressbacke zwei Hohlbolzen auf, wobei die Hohlbolzen beidseitig jeweils mit einer Haltelasche verbunden sind und wobei die Hohlbolzen die Antriebspressbackenhälften um die gemeinsame Achse verschwenkbar lagern. Die Hohlbolzen nehmen dabei jeweils auf einer Seite die Laschen der Antriebspressbackenhälften auf. Zusätzlich können die Hohlbolzen im Bereich zwischen den Haltelaschen beabstandet zueinander angeordnet sein, so dass im Zwischenraum zwischen den beiden Hohlbolzen der Antriebspressbacke der Hohlbolzen des Presseinsatzes angeordnet werden kann. Somit sind sowohl die Presssegmente des Presseinsatzes als auch die Antriebspressbackenhälften der Antriebspressbacke auf einer gemeinsamen Achse angeordnet. Da sich beide Teile um die gleiche Achse drehen, kann der Pressprozess mit einer Kraftübertragung mittels flächiger Kraftübertragungsmittel und Kraftübertragungselemente ohne ein Gleiten der Flächen und somit ohne Reibungsverluste durchgeführt werden.

Zur Festlegung der Hohlbolzen auf die gemeinsame Achse wird bevorzugt ein Verriegelungsbolzen verwendet, der in die Hohlbolzen eingeschoben wird und mit einem Fixierungsmittel in seiner Position gehalten wird.

Das zuvor aufgeführte technische Problem wird erfindungsgemäß gemäß einer dritten Lehre gelöst durch einen Presseinsatz für ein Verpressen von Fittings mit Rohren, mit mindestens zwei Presssegmenten, mit in den Presssegmenten ausgebildeten Presskonturen, mit Gelenkmitteln zum Verbinden der Presssegmente, mit Kopplungsmitteln zum lösbaren Verbinden mit einer Antriebspressbacke und mit Kraftübertragungsmitteln. Der Presseinsatz weist somit zunächst die Funktion eines Pressbackeneinsatzes auf, der mit einer nachfolgend beschriebenen Antriebspressbacke verbunden werden kann. Der Presseinsatz ist weiterhin dadurch gekennzeichnet, dass die Presssegmente Ansetzmittel zum Ansetzen einer Zugbacke aufweisen.

Dabei sind zwei Möglichkeiten gegeben, wie die Ansetzmittel an dem Presseinsatz relativ zu den Gelenkmitteln angeordnet sind. Einerseits können die Ansetzmittel in dem Bereich von den Gelenkmitteln aus betrachtet hinter der Mitte der Presskontur angeordnet sein. Somit sind die Ansetzmittel für den Zugeinsatz einer Zugbacke dort angeordnet, wo der Presseinsatz geöffnet werden kann, um vor dem Verpressen an einem Fitting positioniert zu werden. Der geöffnete Abschnitt wird dann durch die Zugbacke zusammengedrückt und das Fitting verpresst.

Andererseits können die Ansetzmittel in einem Bereich zwischen der Mitte der Presskontur und den Gelenkmitteln angeordnet sein. Zur Definition des Bereichs wird auf die oben im Zusammenhang mit der Pressbacke erläuterte Anordnung verwiesen. Somit sind die Ansetzmittel zwischen der Mitte der Presskontur und den Gelenkmitteln angeordnet.

Die Ansetzmittel sind an der Außenseite der Presssegmente angeordnet und der Presseinsatz ist daher nicht nur als Pressbackeneinsatz für eine Verbindung mit einer Antriebspressbacke sondern auch als Pressschlinge einsetzbar, die losgelöst von der Antriebspressbacke an einem Fitting angesetzt und dann mittels einer Zugbacke verpresst werden kann.

Die Presseinsätze sind mit den mindestens zwei über die Gelenkmittel miteinander verbundenen Presssegmenten als Pressbackeneinsatz konzipiert, der einerseits von der Seite der Gelenkmittel durch die Kraftübertragungsmittel und Anwendung einer Kraft durch die Antriebspressbacke und andererseits an der offenen Schließseite aus mittels der Ansetzmittel verpresst werden kann. Zudem ist ein einzelner Presseinsatz hinsichtlich der Größe einfacher zu handhaben, da die Größe und damit das Gewicht des einzelnen Presseinsatzes an die jeweilige zu verpressende Presskontur angepasst werden kann.

In vorteilhafter Weise können die Presseinsätze mit der jeweiligen Presskontur für eine Press-Dimension sowohl als Pressbackeneinsatz für eine Pressbacke als auch als Pressschlinge eingesetzt werden, die dann von einer Zugbacke verpresst werden kann. Eine vorgenannte Pressschlinge kann zwei oder mehr gelenkig miteinander verbundene Presssegmente aufweisen, die man bei zwei Presssegmenten auch als Pressbackeneinsatz und bei mehr als zwei Presssegmenten als Pressschlinge oder Presskette bezeichnen kann. Im Folgenden wird allgemein der Begriff Pressschlinge dafür verwendet.

Die Ansetzmittel in den Presssegmenten sind dabei bevorzugt als Vertiefungen zur Aufnahme von Zugmitteln der Zugbacke ausgebildet. Die Zugmittel können dann mit entsprechend ausgebildeten Vorsprüngen in die Vertiefungen eingreifen und die Presssegmente des Presseinsatzes zusammendrücken.

Des Weiteren können die Vertiefungen ein Ansetzen der Zugmittel in mindestens zwei, vorzugsweise mehreren unterschiedlichen Winkeln bezogen auf die Achse des zu verpressenden Rohres ermöglichen. Somit kann gerade in beengten Situationen ein Ansetzen der Zugbacke erfolgen, insbesondere wenn ein Ansetzen in einem rechten Winkel zur Achse des zu verpressenden Rohres nicht möglich ist. Bevorzugt sind die Vertiefungen rotationssymmetrisch und die Zugmittel kalottenförmig ausgebildet, so dass ein Ansetzen in beliebigen Winkeln möglich ist.

Des Weiteren ermöglichen die Gelenkmittel in bevorzugter Weise als Teil der Kopplungsmittel ein verschwenkbares Befestigen des Presseinsatzes an einer Antriebspressbacke.

Zudem können die Gelenkmittel als ein jeweils zwei Presssegmente lagernder Hohlbolzen ausgebildet sein. Die beiden Presssegmente sind auf dem Hohlbolzen angeordnet und gleiten über dessen Oberfläche während einer Drehung ab. Die Eigenschaft als Hohlbolzen ermöglicht die Verwendung eines Verriegelungsbolzens der Antriebspressbacke, indem der Verriegelungsbolzen in den Hohlbolzen eingeschoben und darin angeordnet wird.

Weiterhin können die Kopplungsmittel Kopplungsstifte aufweisen, die mit Kopfenden versehen sind. Die Kopfenden weisen einen Radius größer als der Radius des Stiftabschnitts auf. Der Kopplungsstift ist dadurch geeignet, eine hinterschnittene Ausbildung eines Kopplungselements der Antriebsbacke zu hintergreifen. Eine solche hinterschnittene Ausbildung kann beispielsweise eine teilweise offene T-Nut der Kopplungselemente der Antriebsbacke sein, mit der jeweils ein Kopplungsstift mit seinem Kopfende verschiebbar in Eingriff gebracht werden kann. Dabei ist es vorteilhaft, wenn die Kopplungsmittel so ausgestaltet sind, dass im verbundenen Zustand ein mechanisches Spiel zwischen den Kopplungsmitteln und den Kopplungselementen vorhanden ist. Somit lassen sich die Kopplungsstifte und die T-Nuten koppeln, aber leicht gegeneinander für das Koppeln und gegebenenfalls für ein Gleiten beim Pressvorgang verschieben.

Die Kopplungsstifte und die Kraftübertragungsmittel sind weiterhin in bevorzugter Weise an der Außenseite der Presssegmente in dem den Gelenkmitteln zugewandten Bereich angeordnet. Dadurch erfolgt die Kraftübertragung durch die Antriebspressbacke nahe der Gelenkachse des Presseinsatzes.

Alternativ können die die Kopplungsmittel Ausnehmungen zur lösbaren Aufnahme von Kopplungselementen der Antriebspressbacke aufweisen. Die Ausnehmungen sind bevorzugt an der Außenseite der Presssegmente in dem den Gelenkmitteln zugewandten Bereich, besonders bevorzugt in einer Richtung senkrecht zu einer Achse, die den Presseinsatz in zwei Presssegmente teilt, über und unter den Gelenkmitteln, angeordnet.

Die Kraftübertragungsmittel des Presseinsatzes sind in bevorzugter Weise als Anlageflächen ausgebildet, so dass die entsprechend als Anlageflächen ausgebildeten Kraftübertragungselemente der Antriebspressbacke die Kraft flächig übertragen und gegebenenfalls beim Verpressen darauf abgleiten können.

Des Weiteren ist es für den beschriebenen Presseinsatz vorteilhaft, wenn eine elastische Feder zum Schließen der Presssegmente vorgesehen ist. Die Feder kann als Drehfeder ausgebildet sein und schließt den Presseinsatz sowohl in seiner Funktion als Pressschlinge als auch in seiner Funktion als Pressbackeneinsatz der Antriebspressbacke.

Die Feder sichert den Presseinsatz vorzugsweise axial mittels eines weiter vorgesehenen Hohlbolzens, auf dem der Presseinsatz vorzugsweise schwenkbar gelagert ist. Die Feder kann dann vorzugsweise mindestens mit halber Drahtstärke in den Hohlbolzen eingreifen. Durch die axiale Sicherung mittels der Feder kann der Presseinsatz besonders schmal ausgestaltet werden, insbesondere schmaler im Vergleich zu einem mithilfe von äußeren Sicherungsringen gesichert gelagerten Presseinsatz. Insgesamt kann so auch die oben beschriebene Antriebspressbacke und die gesamte Konstruktion der oben beschriebenen Pressbacke platzsparender ausgestaltet werden, wodurch das Arbeiten an schwer zugänglichen engen Stellen vereinfacht wird.

Das oben aufgezeigte technische Problem wird erfindungsgemäß gemäß einer vierten Lehre durch ein System für ein Verpressen von Fittings mit Rohren gelöst mit mindestens zwei Presseinsätzen und mit einer Antriebspressbacke. Die Presseinsätze weisen auf mindestens zwei Presssegmente, in den Presssegmenten ausgebildete Presskonturen, Gelenkmittel zum Verbinden der Presssegmente, Kopplungsmittel zum lösbaren Verbinden mit der Antriebspressbacke und Kraftübertragungsmittel, wobei die mindestens zwei Presseinsätze unterschiedliche Presskonturen aufweisen. Die Antriebspressbacke weist auf zwei Antriebspressbackenhälften, Gelenkelemente zum Verbinden der Antriebspressbackenhälften, Kopplungselemente zum lösbaren Verbinden mit dem Presseinsatz und Kraftübertragungselemente. Das System ist dadurch gekennzeichnet, dass mindestens ein Presseinsatz mit Ansetzmitteln zum Ansetzen einer Zugbacke und ein Zugeinsatz vorgesehen sind. Der Zugeinsatz weist auf zwei Zugeinsatzhälften, Gelenkmittel zum Verbinden der Zugeinsatzhälften, Kopplungsmittel zum lösbaren Verbinden mit der Antriebspressbacke und Kraftübertragungsmittel und den Gelenkmitteln gegenüberliegend ausgebildete Zugmittel, wobei die Kopplungsmittel und die Kraftübertragungsmittel an der Außenseite der Zugeinsatzhälften angeordnet sind. Der Zugeinsatz und die Antriebspressbacke bilden zusammen die Zugbacke.

Somit weist das System nicht nur einen Satz von Presseinsätzen und eine Antriebspressbacke, sondern auch einen Zugeinsatz zum Zusammendrücken des mindestens einen Presseinsatzes mit Ansetzmitteln zur Benutzung als Pressschlinge auf. Bei diesem System sind die Presseinsätze zum einen als Pressbackeneinsätze für eine Antriebspressbacke geeignet. Zum anderen können die Presseinsätze auch als Pressschlinge eingesetzt werden, die dann mittels des Zugeinsatzes zusammengedrückt werden können, wobei der Zugeinsatz ebenfalls mit der Antriebspressbacke mit den gleichen bzw. entsprechenden Kopplungsmitteln gekoppelt werden kann.

In bevorzugter Weise ermöglichen die Zugmittel ein Ansetzen in den Ansetzmitteln in mindestens zwei, vorzugsweise mehreren unterschiedlichen Winkeln bezogen auf die Achse des zu verpressenden Rohres. Da die Presseinsätze als Pressschlinge in beengten Situationen eingesetzt werden, wird das Verpressen vereinfacht, wenn das Ansetzen der Zugmittel an den Ansetzmitteln des Presseinsatzes unter verschiedenen Winkeln möglich ist.

Insbesondere sind dabei die Antriebspressbacke gemäß einer der zuvor erläuterten Ausführungsformen ausgebildet und/oder der Presseinsatz gemäß einer der zuvor erläuterten Ausführungsformen ausgebildet.

Im Folgenden wird die Erfindung anhand von Ausführungsbeispielen mit Bezug auf die Zeichnung erläutert. In der Zeichnung zeigen
- Fig. 1a-f: ein Ausführungsbeispiel eines Systems für ein Verpressen von Fittings mit Rohren in schematischer Darstellung,
- Fig. 2a-c: ein erstes Ausführungsbeispiel einer Pressbacke mit einem Presseinsatz und einer Antriebspressbacke,
- Fig.3a-b: die Pressbacke nach Fig. 2 beim Kopplungsvorgang des Presseinsatzes mit der Antriebspressbacke,
- Fig. 4a-b: eine Antriebspressbacke einer Pressbacke nach Fig. 2,
- Fig. 5a-d: einen Presseinsatz einer Pressbacke nach Fig. 2,
- Fig. 6a-d: ein erstes Ausführungsbeispiel eines Zugeinsatzes, insbesondere für ein System nach Fig. 1e und f,
- Fig. 7a-c: ein zweites Ausrührungsbeispiel einer Pressbacke mit einem Presseinsatz und einer Antriebspressbacke,
- Fig.8a-c: die Pressbacke nach Fig. 7 im geöffneten Zustand,
- Fig.9a-b: die Pressbacke nach Fig. 7 beim Kopplungsvorgang des Presseinsatzes mit der Antriebspressbacke,
- Fig. 10a-b: eine Antriebspressbacke einer Pressbacke nach Fig. 7,
- Fig. 11a-d: ein Presseinsatz einer Pressbacke nach Fig. 7,
- Fig. 12a-b: ein drittes Ausführungsbeispiel einer Antriebspressbacke,
- Fig. 13a-b: einen Presseinsatz für eine Antriebspressbacke nach Fig. 12,
- Fig. 14a-b: ein Zugeinsatz für eine Antriebspressbacke nach Fig. 12 und
- Fig. 15: ein Ausführungsbeispiel eines Systems für ein Verpressen von Fittings mit Rohren.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

Im Folgenden werden zunächst Ausführungsbeispiele eines erfindungsgemäßen Systems für ein Verpressen von Fittings mit Rohren anhand schematischer Darstellungen erläutert. Anschließend werden Details erfindungsgemäßer Pressbacken, Antriebspressbacken, Presseinsätze und Zugeinsätze anhand verschiedener Ausführungsbeispiele diskutiert.

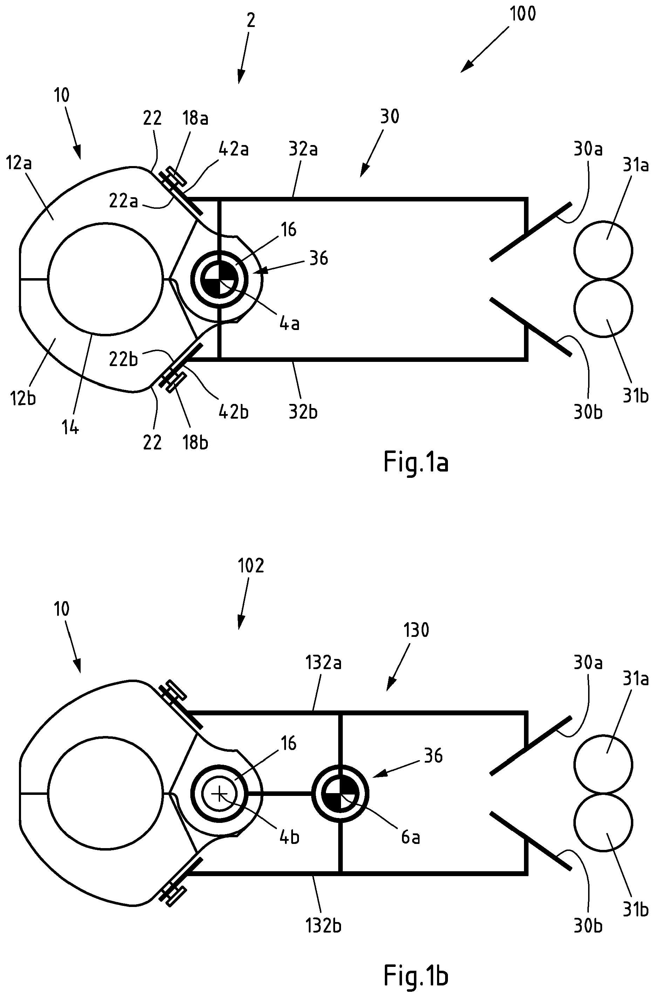

Die Fig. 1a bis 1f zeigen anhand schematischer Darstellungen verschiedene Ausführungsformen eines erfindungsgemäßen Systems für ein Verpressen von Fittings mit Rohren.

In den Fig. 1a bis 1d ist eine Pressbacke aufweisend eine Antriebspressbacke und einen Presseinsatz schematisch dargestellt, wobei drehbar und fest gelagerte Achsen angegeben sind, um die Funktionsweise des Zusammenwirkens von Antriebspressbacke und Presseinsatz darzustellen.

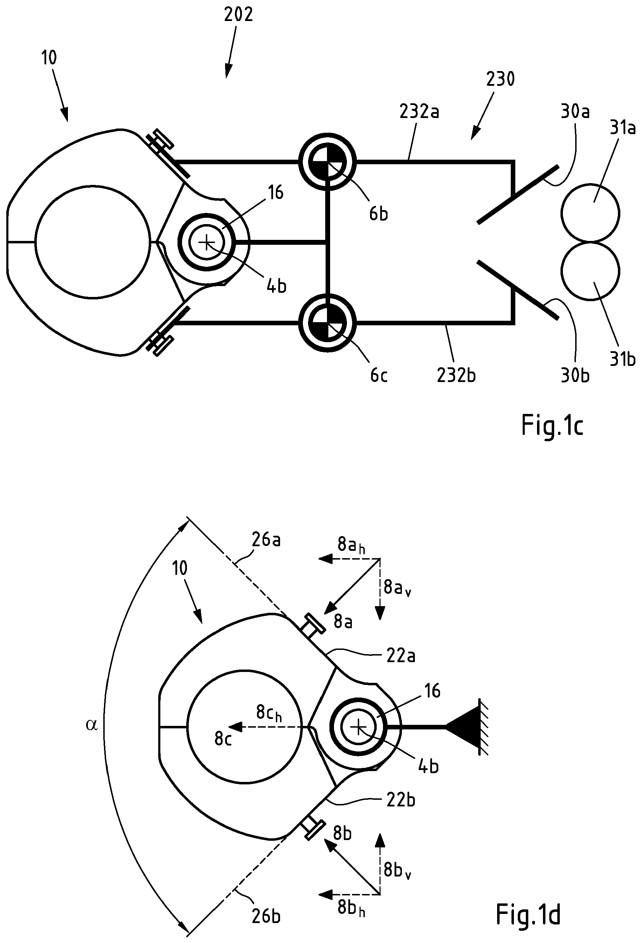

Darüber hinaus ist in Fig. 1d der Winkel α der Anlageflächen zueinander angegeben und die Kraftwirkung der Kraftresultierenden bei dem Verpressen wird mittels eines Kräftediagramms dargestellt.

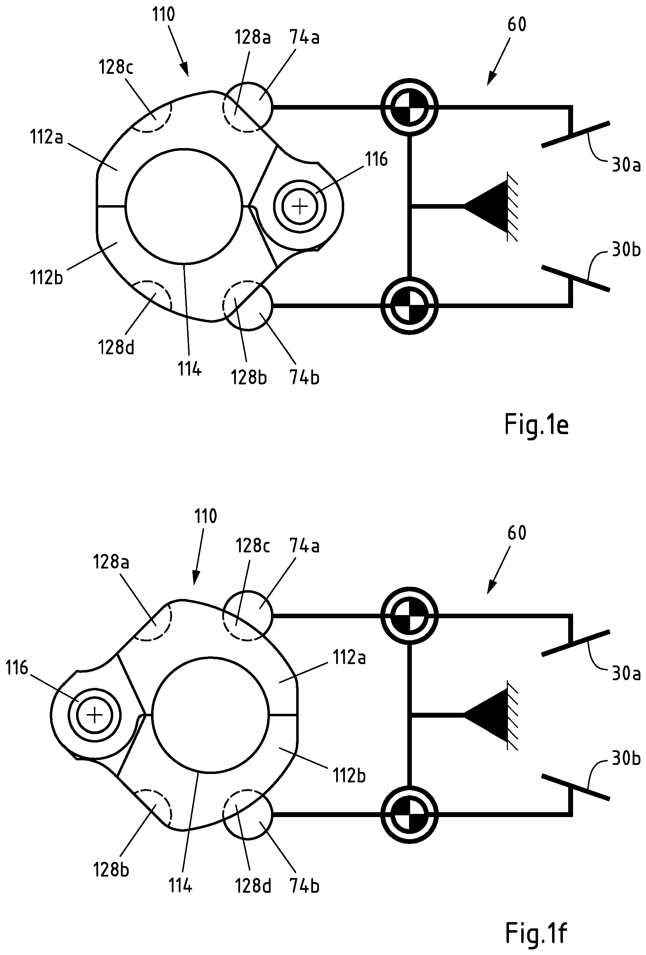

In den Fig. 1e und 1f ist ein weiterer Presseinsatz gezeigt und weiter ist eine Zugbacke schematisch dargestellt, um die Funktionsweise der Zugbacke im Zusammenspiel mit dem Presseinsatz zu verdeutlichen.

Fig. 1a zeigt zunächst ein erstes Ausführungsbeispiel eines erfindungsgemäßen Systems 100 für ein Verpressen von Fittings mit Rohren mit einer Pressbacke 2 aufweisend einen Presseinsatz 10 mit zwei Presssegmenten 12a, 12b, wobei in den Presssegmenten 12a, 12b eine Presskontur 14 ausgebildet ist, und weiter aufweisend eine Antriebspressbacke 30 mit zwei Antriebspressbackenhälften 32a, 32b und Gelenkelementen 36. Der Presseinsatz 10 weist Kopplungsmittel 18a, 18b auf, über die der Presseinsatz 10 mit der Antriebspressbacke 30 lösbar verbunden ist. Weiter weist der Presseinsatz 10 Gelenkmittel 16 zum Verbinden der Presssegmente 12a, 12b auf, wobei die Gelenkmittel 16 den Presseinsatz 10 darüber hinaus verschwenkbar mit der Antriebspressbacke 30 verbinden.

Weiterhin weist der Presseinsatz 10 Kraftübertragungsmittel 22 auf und die Antriebspressbacke 30 weist Kraftübertragungselemente 42a, 42b (schematisch dargestellt) auf, die vorliegend vollständig in einem Bereich zwischen der Mitte der Presskontur 14 und den Gelenkmitteln 16 angeordnet sind. In der vorliegenden Ansicht ist die Pressbacke 2 mit der Antriebspressbacke 30 horizontal ausgerichtet und der Antrieb des Presswerkzeugs verläuft horizontal. Lediglich zwei Rollen 31a, 31b eines Doppelrollenstößels sind gezeigt, die mit Einlaufkonturen 30a, 30b in Eingriff gelangen und zusammenwirken. Beim Vorschub der Rollen 31a, 31b, in Fig. 1a nach links, werden die Antriebspressbackenhälften 32a, 32b auseinander gedrückt, so dass die Kraftübertragungselemente 42a, 42b und somit die Presssegmente 12a 12b zusammengedrückt werden. Dadurch kommt es zum Verpressen eines Fittings.

Die Achse der Presskontur 14 steht senkrecht zur Seitenansicht und senkrecht zur Papierebene, wobei die Mitte der Presskontur 14 vorliegend der Achse der Presskontur 14 entspricht und somit der Achse des zu verbindenden Rohres (nicht dargestellt). Die Ausrichtung der Achse der Gelenkmittel 16 des Presseinsatzes 10 steht ebenfalls senkrecht zur horizontalen Ausrichtung der Pressbacke 2 und senkrecht zur Papierebene.

Der Bereich zwischen der Mitte der Presskontur 14 und den Gelenkmitteln 16 entspricht dann dem Raum zwischen einer sich in der Zeichenebene senkrecht zur Achse der Presskontur 14 und senkrecht zur horizontalen Richtung erstreckenden Ebene und einer sich in der Zeichenebene senkrecht zur Achse der Gelenkmittel 16 und senkrecht zur horizontalen Richtung erstreckenden Ebene. Mittels der mit den Kopplungselementen 42a, 42b der Antriebspressbacke 30 gekoppelten Kopplungsmittel 18a, 18b des Presseinsatzes 10, die vorliegend als Anlageflächen 22a, 22b ausgebildet sind, wird durch eine Bewegung der Antriebspressbacke 30 der Presseinsatz 10 betätigt. Durch ein Zusammendrücken der Antriebspressbackenhälften 32a, 32b kann der Presseinsatz 10 geöffnet werden, wobei die Bewegung der Antriebspressbackenhälften 32a, 32b durch das Aufeinanderstoßen der mittels der Gelenkelemente 36 gelagerten und gegenüberliegenden Enden der Antriebspressbackenhälften 32a, 32b (schematisch dargestellt) begrenzt wird.

In der in Fig. 1a dargestellten Ausgestaltung der Pressbacke 2 sind der Presseinsatz 10 und die Antriebspressbackenhälften 32a, 32b um eine gleiche Achse 4a verschwenkbar angeordnet. Die beiden Presssegmente 12a, 12b des Presseinsatzes 10 und die beiden Antriebspressbackenhälften 32a, 32b der Antriebspressbacke 30 drehen sich um die gleiche Achse 4a, die Gelenkmittel 16 und die Gelenkelemente 36 sind also auf der gleichen Achse 4a dreh- und schwenkbar angeordnet.

In Fig. 1b ist eine Ausgestaltung einer Pressbacke 102 dargestellt, bei der der Presseinsatz 10 und die Antriebspressbackenhälften 132a, 132b der Antriebspressbacke 130 um verschiedene Achsen 4b, 6a verschwenkbar angeordnet sind, wobei die Antriebspressbackenhälften 132a, 132b eine gleiche Achse 6a aufweisen. Somit wird eine Ausgestaltung der Pressbacke 102 mit zwei Achsen 4b, 6a angegeben.

In Fig. 1c ist eine Ausgestaltung einer Pressbacke 202 dargestellt, bei der der Presseinsatz 10 und die Antriebspressbackenhälften 232a, 232b um verschiedene Achsen 4b, 6b, 6c verschwenkbar angeordnet sind, wobei die Antriebspressbackenhälften verschiedene Achsen 6b, 6c aufweisen. Somit wird eine Ausgestaltung der Pressbacke 202 mit drei Achsen 4b, 6b, 6c angegeben.

Fig. 1d zeigt einen Presseinsatz 10, wobei die Kraftübertragung von einer Antriebspressbacke (nicht gezeigt) auf den Presseinsatz 10 anhand zweier Pfeile 8a, 8b dargestellt ist. Diese Krafteinleitung 8a, 8b verläuft in einem Winkel zueinander und beide Pfeile 8a, 8b sind in Fig. 1d in einem Kraftparallelogramm in die horizontalen Komponenten 8aₕ, 8bₕ und die vertikalen Komponenten 8aᵥ, 8bᵥ aufgeteilt.

Die von den Kraftübertragungsmitteln 22a, 22b und den Kraftübertragungselementen (nicht gezeigt) der Antriebspressbacke erzeugte und den Presseinsatz 10 zusammendrückende Kraft wird von den beiden vertikalen Komponenten 8aᵥ, 8bᵥ gebildet. Die beiden horizontalen Komponenten 8aₕ, 8bₕ resultieren in einer Kraft 8c, die von der Position der Gelenkmittel 16 aus in Richtung weg von der schematisch dargestellten Lagerung des Presseinsatzes 10 gerichtet ist.

Die Kraftresultierende 8c als lineare Kraftkomponente wird durch die Lagerung des Presseinsatzes 10 gegenüber einer Antriebspressbacke (nicht gezeigt) ausgeglichen. Es verbleiben somit die aufeinander zu gerichteten vertikalen Kraftkomponenten 8aᵥ, 8bᵥ.

Die vorliegend als ebene Anlageflächen 22a, 22b ausgebildeten Kraftübertragungsmittel 22 weisen einen Winkel α relativ zueinander auf, wobei der Winkel α zwischen zwei den Anlageflächen 22a, 22b zugeordneten Ebenen 26a, 26b gemessen wird. Ein Winkel α von 0° bedeutet parallel zueinander angeordnete Anlageflächen 22a, 22b. Vorliegend ist ein Winkel α von größer 80° dargestellt.

Die Fig. 1e und 1f zeigen nun weitere Elemente des Systems für ein Verpressen von Fittings mit Rohren mit einem Presseinsatz 110 aufweisend zwei Presssegmente 112a, 112b, wobei in den Presssegmenten 112a, 112b eine Presskontur 114 ausgebildet ist und wobei die Presssegmente 112a, 112b über Gelenkmittel 116 miteinander verbunden sind. Der Presseinsatz 110 weist weiter Ansetzmittel 128a, 128b, 128c, 128d (nachfolgend auch 128) für eine Zugbacke 60 auf, so dass mittels der Zugmittel 74a, 74b der Zugbacke 60 (nur schematisch dargestellt), ein Fitting durch ein Zusammendrücken des Presseinsatzes 110 verpresst werden kann. In Fig. 1e und 1f sind zwei Möglichkeiten eines solchen Verpressens, bei dem der Presseinsatz 110 als Pressschlinge eingesetzt wird, dargestellt. Der Presseinsatz 110 ist dabei nicht gelagert oder sonst mit der Antriebspressbacke verbunden, wie es in den Fig. 1a bis 1d gezeigt ist.

Zunächst zeigt Fig. 1e einen Presseinsatz 110 mit Ansetzmitteln 128 in Form von Vertiefungen 128a, 128b, die an der Außenseite der Presssegmente 112a, 112b von den Gelenkmitteln 116 aus betrachtet vor der Mitte des Presseinsatzes 110 angeordnet sind.

Fig. 1f zeigt einen Presseinsatz 110 mit Ansetzmitteln 128 in Form von Vertiefungen 128c, 128d, die an der Außenseite der Presssegmente 112a, 112b von den Gelenkmitteln 116 aus betrachtet hinter der Mitte des Presseinsatzes 110 angeordnet sind. Somit sind die Ansetzmittel 128 in diesem Fall dort angeordnet, wo der Presseinsatz 110 geöffnet werden kann, um vor dem Verpressen an einem Fitting positioniert zu werden. Der geöffnete Abschnitt wird dann durch die Zugbacke 60 zusammengedrückt und das Fitting verpresst.

Die Ansetzmittel 128a, 128b können auch als mit den Kopplungselementen einer Antriebspressbacke zusammenwirkenden Kopplungsmittel ausgebildet sein. In diesem Fall dienen die Ansetzmittel 128a, 128b sowohl der Kraftübertragung bei der Nutzung eines Presseinsatzes 110 in seiner Funktion als Pressbackeneinsatz als auch bei der Nutzung in seiner Funktion als Pressschlinge.

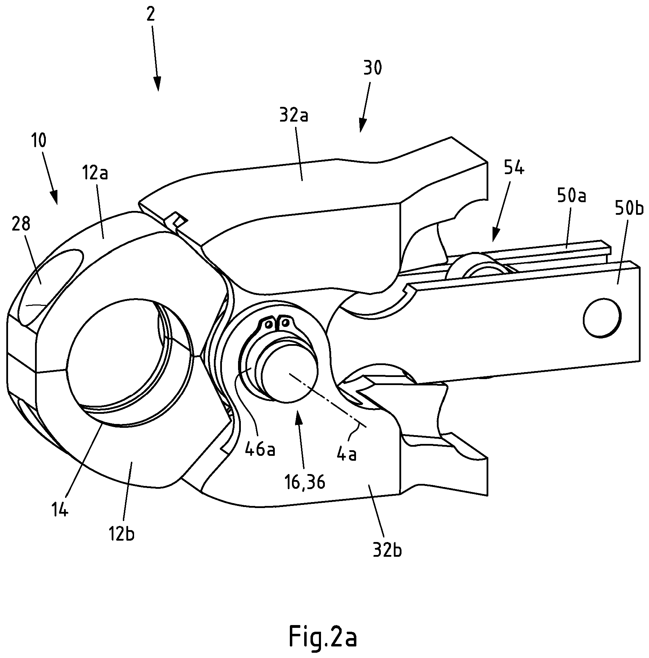

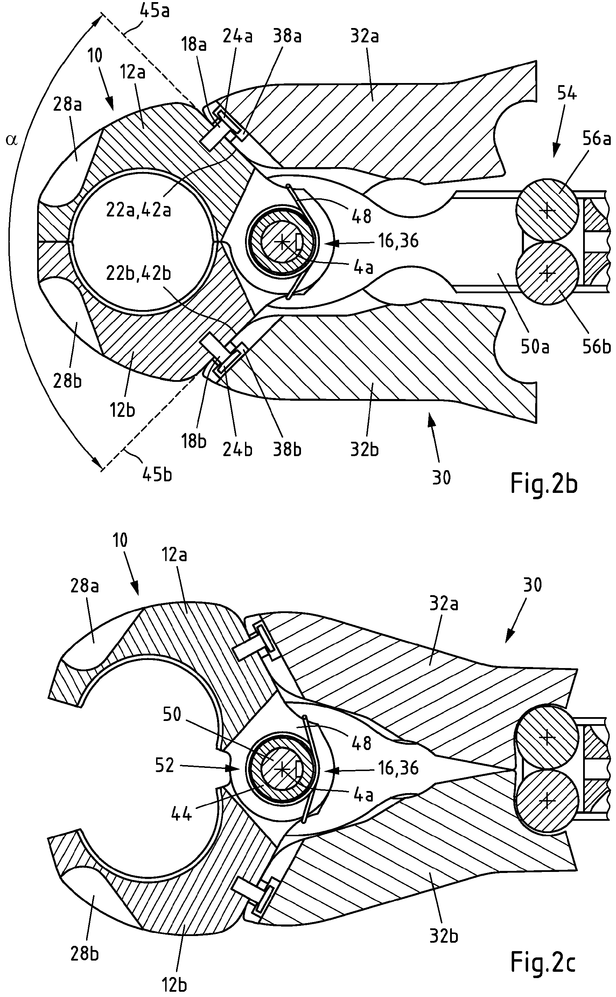

Die Fig. 2a bis 2c zeigen ein erstes Ausführungsbeispiel einer Pressbacke 2 mit einem Presseinsatz 10 und einer Antriebspressbacke 30, insbesondere für ein System nach Fig. 1a und Fig. 1d. Fig. 2a zeigt zunächst die Pressbacke 2 in einer perspektivischen Seitenansicht, Fig. 2b zeigt die Pressbacke 2 in einer seitlichen Schnittansicht in geschlossenem Zustand und Fig. 2c in einer seitlichen Schnittansicht in geöffnetem Zustand.

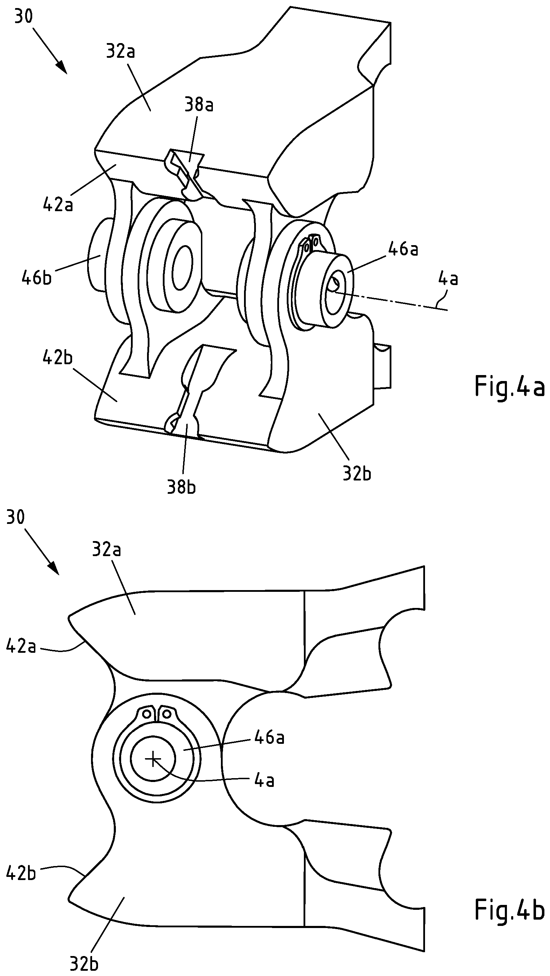

Die Pressbacke 2 weist einen Presseinsatz 10 und eine Antriebspressbacke 30 mit Gelenkelementen 36 in Form von zwei Hohlbolzen 46a, 46b auf, die die zwei Antriebspressbackenhälften 32a, 32b um die gemeinsame Achse 4a schwenkbar lagern. Die Hohlbolzen 46a, 46b sind auch Fig. 4a und 4b zu erkennen. Haltelaschen 50a, 50b sind zum Halten und Verbinden der Antriebspressbackenhälften 32a, 32b vorgesehen. Mit den Haltelaschen 50a, 50b ist ein Antriebsmechanismus 54 vorliegend ausgestaltet als Doppelrollenstößel mit zwei Rollen 56a, 56b verbunden, wobei der Antriebsmechanismus 54 eine Wirkverbindung mit einem Presswerkzeug (nicht dargestellt) bildet. Die Rollen 56a, 56b wirken mit einer nicht dargestellten Einlaufkontur der Antriebspressbackenhälften 32a, 32b zusammen, wie oben beschrieben worden ist.

Beim Verpressen wird das zu verpressende Fitting (nicht dargestellt) durch die Presssegmente 12a, 12b bzw. die Presskontur 14 des Presseinsatzes 10 aufgenommen und zumindest teilweise verformt, wobei die Verformung durch die Ausgestaltung der Presskontur 14 beeinflusst ist. Die zwei Presssegmente 12a, 12b sind über Gelenkmittel 16 miteinander verbunden, wobei vorliegend die Gelenkmittel 16 als ein beide Presssegmente 12a, 12b lagernder Hohlbolzen 44 ausgebildet ist. Eine elastische Feder 48 dient dem Schließen der Presssegmente 12a, 12b.

Der Presseinsatz 10 ist mittels ineinandergreifender Kopplungsmittel 18 in Form von Kopplungsstiften 18a, 18b mit Kopfenden 24a, 24b und Kopplungselementen 38 in Form von teilweise offenen T-Nuten 38a, 38b mit der Antriebspressbacke 30 gekoppelt, wobei die Kopplungsstifte 18a, 18b im gekoppelten Zustand in die durch die T-Nuten 38a, 38b gebildeten Hinterschneidungen eingreifen. Die Kraftübertragungselemente 42 der Antriebspressbacke 30 sind als Anlageflächen 42a, 42b ausgebildet, die an den als Anlageflächen 22a, 22b ausgebildeten Kraftübertragungsmitteln 22 des Presseinsatzes 10 anliegen. Bei dem Verpressen eines Fittings wird der Presseinsatz 10 zusammengedrückt, indem die durch das Presswerkzeug erzeugte Kraft über die Kraftübertragungselemente 42 und die Kraftübertragungsmittel 22 auf den Presseinsatz 10 übertragen wird.

Ebenso weisen die Anlageflächen 42a, 42b einen Winkel α relativ zueinander auf, wobei der Winkel α zwischen zwei den Anlageflächen 42a, 42b zugeordneten Ebenen 45a, 45b gemessen wird. Vorliegend ist ein Winkel α von größer 80° dargestellt. In dem in Fig. 2b dargestellten geschlossenen Zustand der Antriebspressbacke 30 mit gekoppeltem Presseinsatz 10 ist ersichtlich, dass der Winkel zwischen den Anlageflächen 22a, 22b dem Winkel zwischen den Anlageflächen 42a, 42b entspricht.

Wegen der übereinstimmenden Drehachsen gleiten beim Verpressen in vorteilhafter Weise die Kraftübertagungsmittel nicht auf den Kraftübertragungselementen ab, so dass bei der Kraftübertragung von der Antriebspressbacke 30 auf den Presseinsatz 10 Reibungsverluste minimiert oder gar vermieden werden. Durch ein Wegfallen der Gleitbewegung können die als Kopplungselemente 38 dienenden T-Nuten 38a, 38b verglichen mit den Formen von als Kopplungselemente dienenden T-Nuten bei Pressbacken, bei denen ein Gleiten der Kraftübertragungsmittel auf den Kraftübertragungselementen beim Verpressen auftritt, kürzer gestaltet werden, so dass der Kopplungsvorgang des Presseinsatzes 10 mit der Antriebspressbacke 30 vereinfacht wird.

Der Presseinsatz 10 und die Antriebspressbacke 30 der Pressbacke 2 sind in diesem Ausführungsbeispiel um eine gemeinsame Schwenkachse 4a verschwenkbar. Zu diesem Zweck ist ein beide Presssegmente 12a, 12b des Presseinsatzes 10 lagernder Hohlbolzen 44 zwischen den beiden die Antriebspressbackenhälften 32a, 32b der Antriebspressbacke 30 lagernden Hohlbolzen 46a, 46b angeordnet. Ein

Verriegelungsbolzen 50 ist weiterhin in den Hohlbolzen 44, 46a, 46b als gemeinsame Schwenkachse 4a angeordnet. Der Verriegelungsbolzen 50 dient somit der schwenkbaren Verbindung des Presseinsatzes 10 mit der Antriebspressbacke 30 und lagert zudem die Antriebspressbackenhälften 32a, 32b verschwenkbar. Die Verbindungselemente 52, die den Presseinsatz schwenkbar mit der Antriebspressbacke 30 verbinden, sind vorliegend also als Hohlbolzen 44, 46a, 46b und Verriegelungsbolzen 50 ausgestaltet.

Weiter weist der Presseinsatz 10 Ansetzmittel 28 in Form von rotationssymmetrischen Vertiefungen 28a, 28b auf, in die die Zugmittel einer Zugbacke 60 (siehe schematisch in Fig. 1e und 1f) eingreifen können. Der Presseinsatz 10 ist so auch als Pressschlinge einsetzbar. Dies ermöglicht ein Verpressen von Fittings in schwer zugänglichen Bereichen der Installation, beispielsweise in Raumecken. Somit ergibt sich die vorteilhafte Ausgestaltung der Eignung des Presseinsatzes 10 sowohl in Verbindung mit einer Antriebspressbacke 30 als Pressbackeneinsatz sowie auch als Pressschlinge in Verbindung mit einer Zugbacke 60, wie sie im Zusammenhang mit Fig. 1e und 1f gezeigt worden ist.

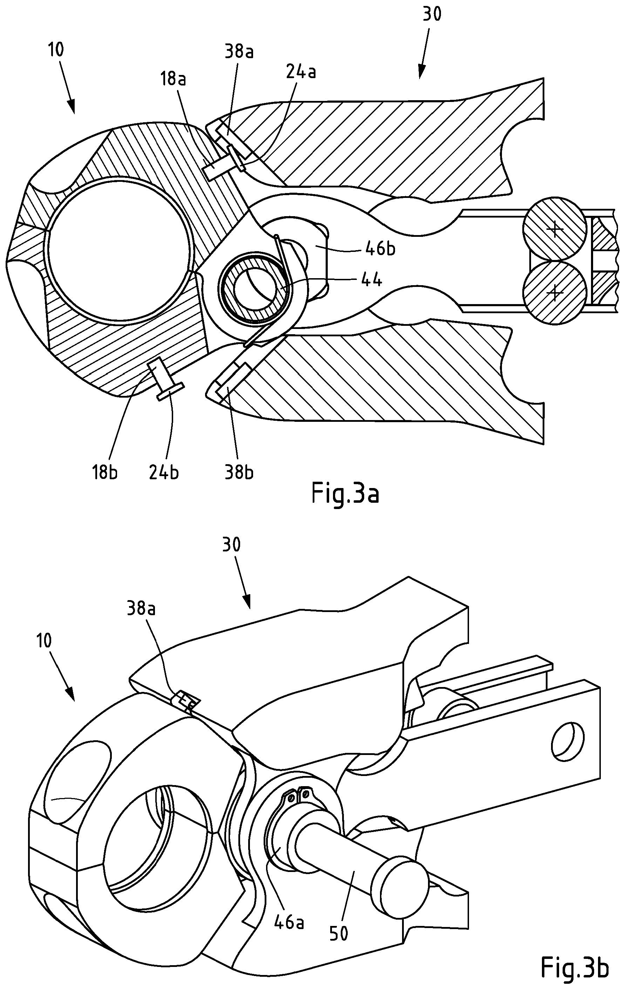

In den Fig. 3a und 3b ist die Pressbacke nach Fig. 2a-c beim Kopplungsvorgang des Presseinsatzes 10 mit der Antriebspressbacke 30 in einer seitlichen Schnittansicht (Fig. 3a) und in einer perspektivischen Ansicht (Fig. 3b) gezeigt. Zunächst wird der Presseinsatz 10 in leicht geschwenkter Lage in die Antriebspressbacke 30 so eingeführt, dass die Kopfenden 24a, 24b der Kopplungsstifte 18a, 18b in die Öffnungen der T-Nuten 38a, 38b eingreifen (Fig. 3a). Durch das Zurückdrehen des Presseinsatzes 10 in die (vorliegend horizontal dargestellte) Lage der Antriebspressbacke 30, greifen die Kopplungsstifte 18a, 18b in den Hinterschnitt der T-Nuten 38a, 38b ein. Ist die Öffnung des Hohlbolzens 44 deckungsgleich mit den Öffnungen der Hohlbolzen 46a, 46b der Antriebspressbacke 30, kann der Verriegelungsbolzen 50 eingeschoben werden.

In Fig. 4a und 4b ist eine Antriebspressbacke 30 einer Pressbacke 2 nach Fig. 2 in einer perspektivischen Ansicht und in einer Seitenansicht gezeigt. Der als gemeinsame Schwenkachse 4a angeordnete Verriegelungsbolzen 50 (gezeigt in Fig. 2 und Fig. 3) wird sowohl von den Hohlbolzen 46a, 46b der Antriebspressbackenhälften 32a, 32b als auch von den Haltelaschen 50a, 50b (siehe Fig. 2) umschlossen.

Die Antriebspressbackenhälften 32a, 32b weisen als Kopplungselemente 38 jeweils hinterschnittene Ausnehmungen in Form einer teilweise offenen T-Nut 38a, 38b auf. Die Kopfenden 24a, 24b der Kopplungsstifte 18a, 18b des Presseinsatzes 10, die einen größeren Radius als der Radius des Stiftabschnitts aufweisen, können die Hinterschneidungen hintergreifen, so dass im verbundenen Zustand ein mechanisches Spiel zwischen den Kopplungsstiften 18a, 18b und den T-Nuten 38a, 38b vorhanden ist. Dies ermöglicht ein leichtes Verschieben des Presseinsatzes 10 und der Antriebspressbacke 30 gegeneinander beim Verpressen. Die Kraftübertragungselemente 42 sind als ebene Anlageflächen 42a, 42b ausgestaltet.

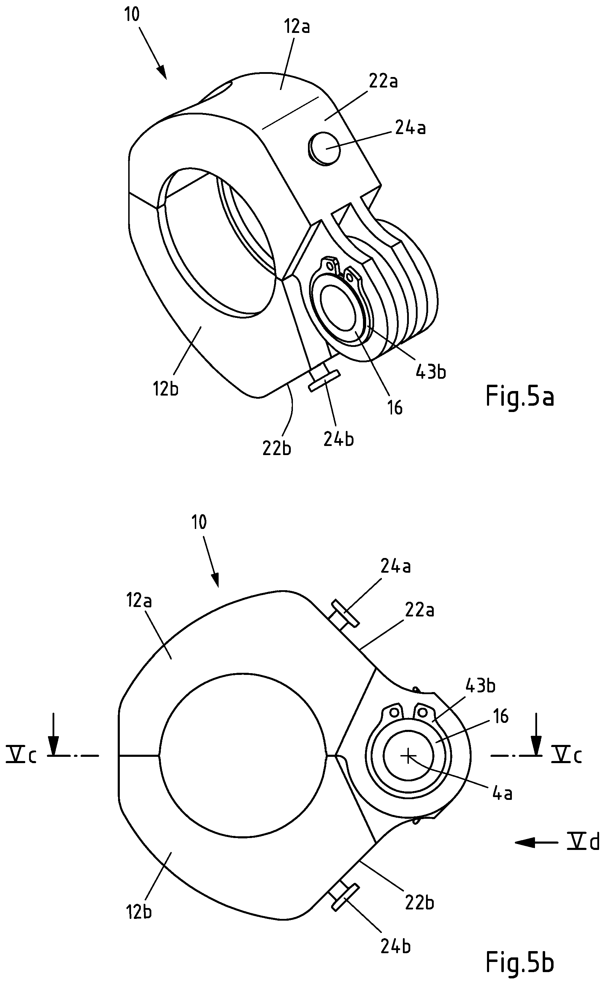

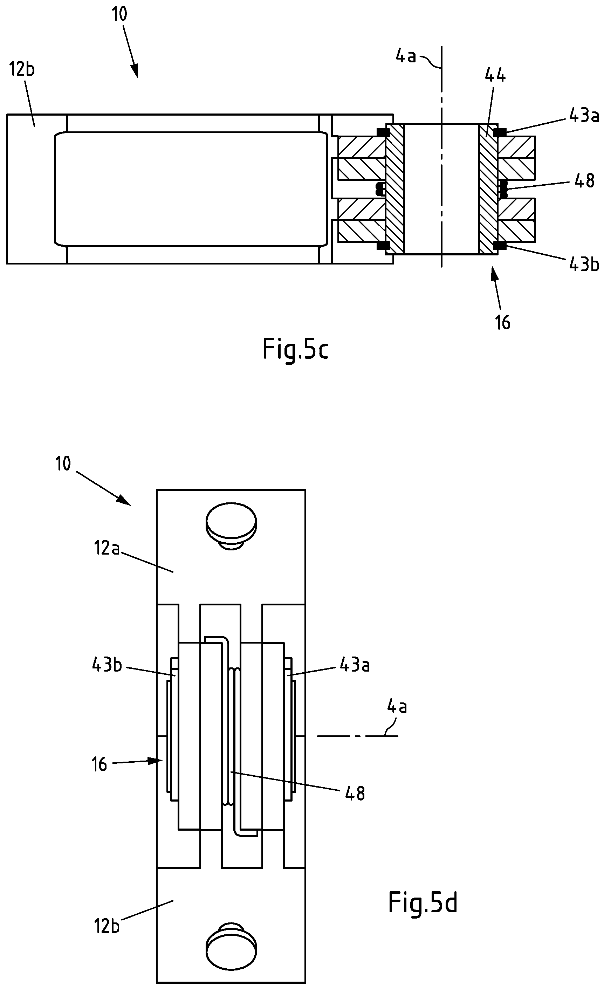

Fig. 5a bis 5d zeigen einen Presseinsatz 10 einer Pressbacke nach Fig. 2, wobei in Fig. 5c eine Schnittansicht durch die in Fig. 5b eingezeichnete Schnittachse Vc dargestellt ist und wobei in Fig. 5d die in Fig. 5b durch die aus der Richtung Vd angegebene Draufsicht auf die die Gelenkmittel 16 aufweisende Seite des Presseinsatzes 10 dargestellt ist.

In der in Fig. 5a und 5b gezeigten Ansicht sind die als Anlageflächen 22a, 22b ausgebildeten Kraftübertragungsmittel 22 des Presseinsatzes 10 gut ersichtlich. Durch diese Anlageflächen 22a, 22b und durch die ebenfalls als Anlageflächen 42a, 42b ausgebildeten Kraftübertragungselemente 42 der Antriebspressbacke 30 nach Fig. 4 wird eine flächige Kraftübertragung unabhängig von der Kopplung ermöglicht. Weiter ermöglicht die Ausgestaltung als teilweise offene T-Nuten 38a, 38b ein besonders leichtgängiges Einschieben des Presseinsatzes 10 in die Antriebspressbacke 30 und vereinfacht so den Umgang mit dem Presswerkzeug.

Anhand der in Fig. 5c und 5d gezeigten Darstellung ist die Feder 48 gezeigt, die die Presssegmente 12a, 12b des Presseinsatzes 10 gegeneinander spannt und somit dem Verschließen des Presseinsatzes10 dient. Zur axialen Sicherung des Hohlbolzens 44 sind Sicherungsringe 43a, 43b vorgesehen.

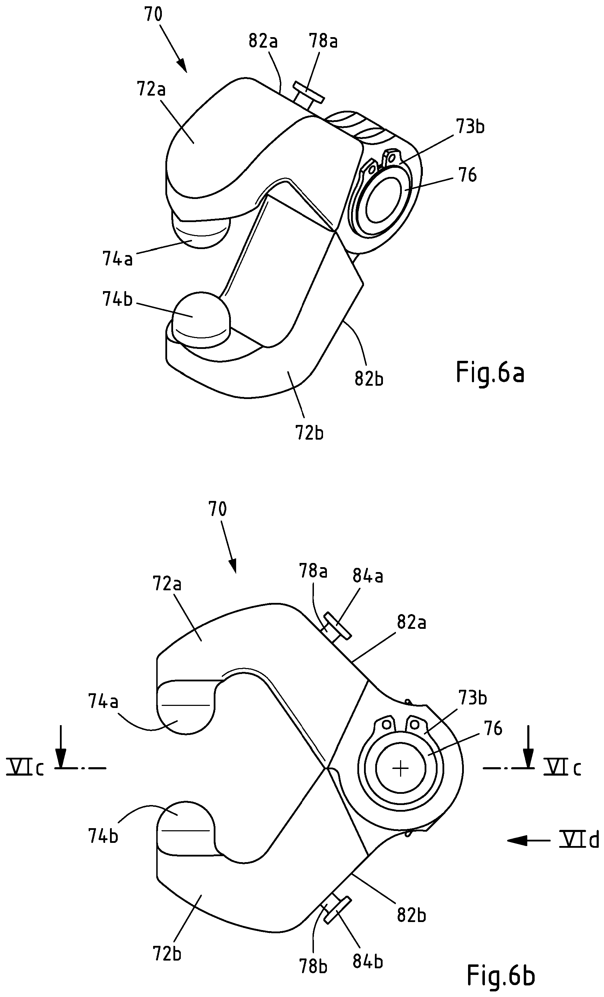

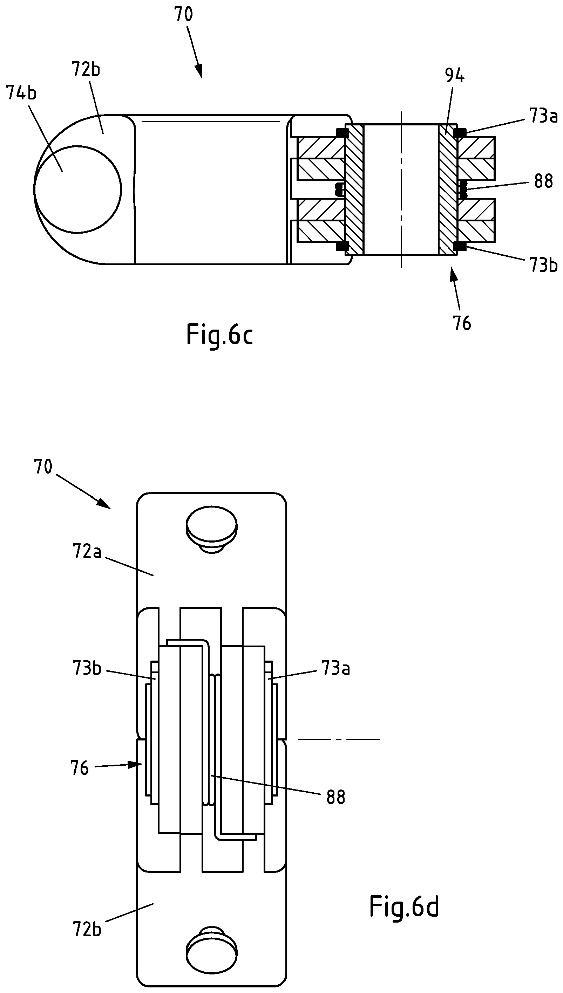

Fig. 6a bis 6d zeigen ein erstes Ausführungsbeispiel eines Zugeinsatzes 72, insbesondere für ein System nach Fig. 1e und Fig. 1f, wobei in Fig. 6c eine Schnittansicht durch die in Fig. 6b eingezeichnete Schnittachse VIc dargestellt ist und wobei in Fig. 6d die in Fig. 6b durch die aus der Richtung VId angegebene Draufsicht auf die die Gelenkmittel 76 aufweisende Seite des Zugeinsatzes 70 dargestellt ist. Die Gelenkmittel 76 dienen dem Verbinden der Zugeinsatzhälften 72a, 72b. Weiter sind Kopplungsmittel 78, hier in Form von Kopplungsstiften 78a, 78b mit Kopfenden 84a, 84b zum Koppeln des Zugeinsatzes 70 mit einer Antriebspressbacke 30 (nicht dargestellt in Fig. 6) vorgesehen. Somit wirken der Zugeinsatz 70 und die Antriebspressbacke 30 als eine Zugbacke 60 zusammen, wie in Fig. 1e und 1f schematisch dargestellt ist. Kraftübertragungsmittel 82, hier in Form von Anlageflächen 82a, 82b, sind zudem auf der Außenseite der Zugeinsatzhälften 72a, 72b vorgesehen. Die Zugeinsatzhälften 72a, 72b weisen jeweils den Gelenkmitteln 76 gegenüber liegend ausgebildete Zugmittel 74a, 74b auf, die in die Ansetzmittel 28 eines (nicht in Fig. 6 dargestellten) Presseinsatzes 10 eingreifen. Der Zugeinsatz 70 und die Antriebspressbacke 30 wirken somit als Zugbacke 60 (siehe schematisch Fig. 1e und 1f) zusammen und verpressen den Presseinsatz 10 radial nach innen. In diesem Fall dient der Presseinsatz 10 als Pressschlinge und ein Verpressen von Fittings in schwer zugänglichen oder räumlich begrenzten Arbeitsbereichen wird vereinfacht.

Die als Anlageflächen 82a, 82b ausgebildeten Kraftübertragungsmittel 82 des Zugeinsatzes 70 ermöglichen zusammen mit ebenfalls als ebene Anlageflächen ausgestalteten Kraftübertragungselementen einer Antriebspressbacke (nicht dargestellt) eine flächige Kraftübertragung, die unabhängig von der Kopplung des Zugeinsatzes 70 mit der Antriebspressbacke 30 ist. Das Koppeln des Zugeinsatzes 70 mit der Antriebspressbacke 30 kann analog wie das Koppeln eines Presseinsatzes 10 mit einer Antriebspressbacke 30 durchgeführt werden.

Die Gelenkmittel 76 sind als Hohlbolzen 94 ausgebildet, der die beiden Zugeinsatzhälften 72a, 72b schwenkbar lagert. Eine Feder 88 dient dem Verschließen des Zugeinsatzes 70 indem sie die beiden Zugeinsatzhälften 72a, 72b gegeneinander spannt. Zur axialen Sicherung des Hohlbolzens 94 sind Sicherungsringe 73a, 73b vorgesehen.

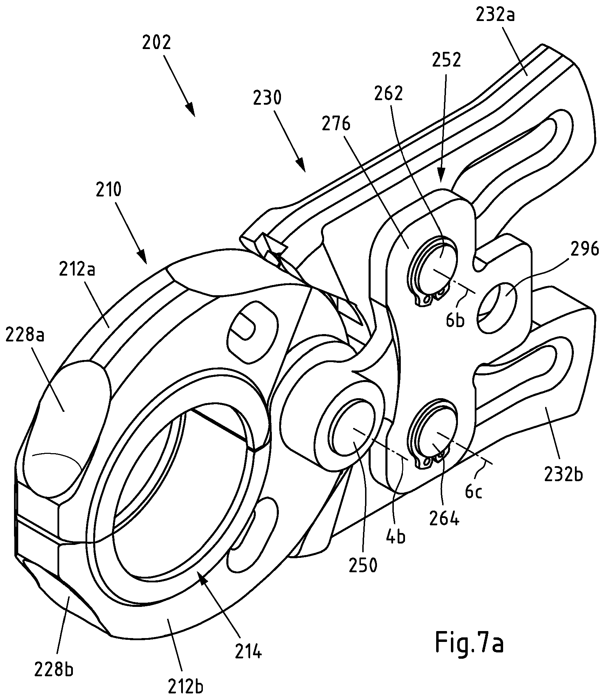

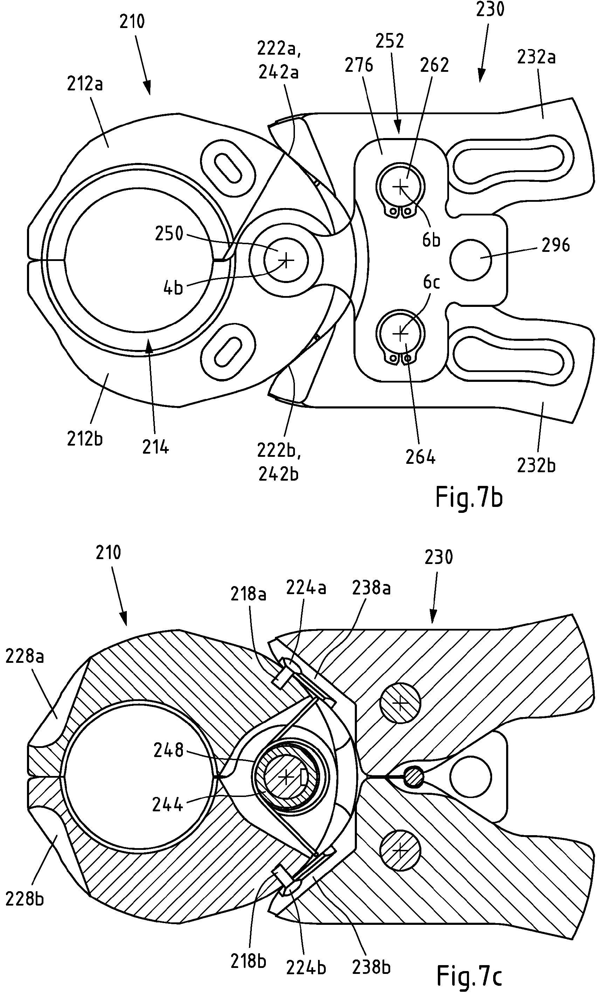

In Fig. 7a bis 7c ist ein zweites Ausführungsbeispiel einer Pressbacke 202 mit einem Presseinsatz 210 und einer Antriebspressbacke 230 mit zwei Antriebspressbackenhälften 232a, 232b, insbesondere für ein System nach Fig. 1c, in geschlossenem Zustand gezeigt. Fig. 7a zeigt eine perspektivische Ansicht der Pressbacke 202, wogegen Fig. 7b eine seitliche Ansicht und Fig. 7c eine seitliche Schnittansicht zeigt.

Im Gegensatz zu der in Fig. 2 gezeigten Ausführungsform weist die Pressbacke 202 hier unterschiedliche Drehachsen 4b, 6b, 6c für den Presseinsatz 210 und die Antriebspressbackenhälften 232a, 232b auf, wobei die Antriebspressbackenhälften 232a, 232b unterschiedliche Achsen 6b, 6c aufweisen. Somit ergeben sich für diese Ausführungsform drei Drehachsen 4a, 6b, 6c. Die Verbindung der Antriebspressbackenhälften 232a, 232b und des Presseinsatzes 210 erfolgt mittels einer als Verbindungselement 252 dienenden Seitenplatte 276, wobei das weitere hier leer dargestellte Lagerungsauge 296 der Seitenplatte 276 zur Verbindung mit einem Presswerkzeug (nicht dargestellt) dient.

Durch das Vorsehen verschiedener Achsen, um die der Presseinsatz 210 und die Antriebspressbackenhälften 232a, 232b drehbar gelagert sind, kann die Gesamtdicke der Pressbacke 202 verringert werden und die Konstruktion insgesamt einfacher gestaltet werden. Die Fertigung der Antriebspressbacke 230 ist aufgrund der einfacheren Konstruktion weniger aufwändig und somit kostengünstiger.

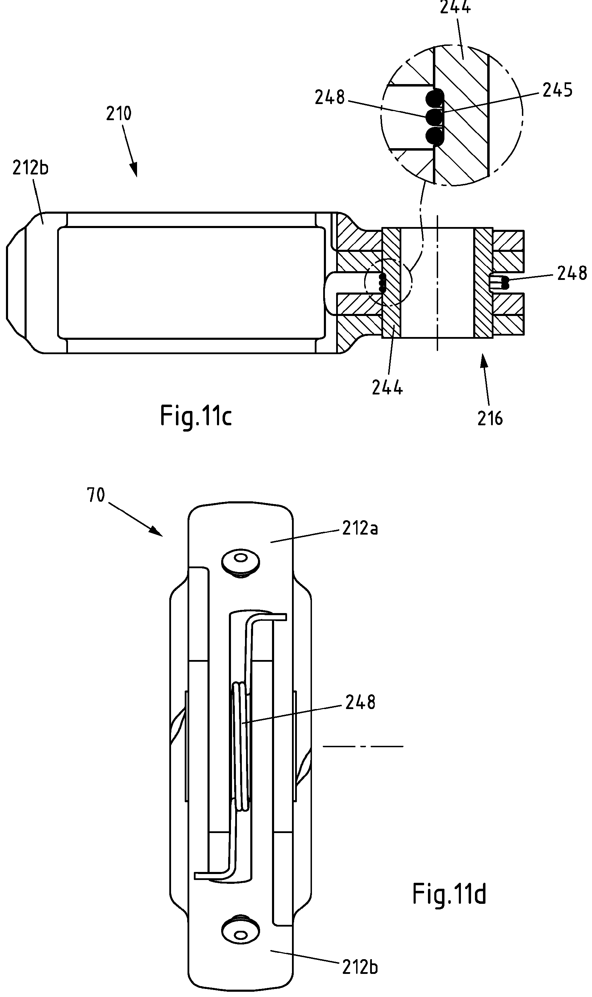

Auch bei dieser Ausführungsform einer Pressbacke 202 sind bei dem Presseinsatz 210 Presssegmente 212a, 212b bzw. eine Presskontur 214 zur Aufnahme des zu verpressenden Fittings vorgesehen. Die zwei Presssegmente 212a, 212b sind über Gelenkmittel 216 miteinander verbunden, wobei die Gelenkmittel 216 als ein beide Presssegmente 212a, 212b lagernder und mittels einer Feder 248 axial gesicherter Hohlbolzen 244 ausgebildet sind. Die Feder 248 greift mit mindestens halber Drahtstärke in die mittlere Nut 245 des Hohlbolzens 244, wie in dem vergrößerten Ausschnitt aus Fig. 11c gezeigt und weiter unten erläutert wird.

Auf diese Weise kann das Gelenk des Presseinsatzes 210 schmal ausgestaltet sein, insbesondere schmaler als bei einer vergleichbaren Sicherung mithilfe von Sicherungsringen wie bei den zuvor beschriebenen Ausführungsformen eines Presseinsatzes 10 nach Fig. 5. Aufgrund der sich so ergebenden geringen Breite des Gelenks ist der Spalt zwischen den Antriebspressbackenhälften, in dem der Presseinsatz 210 gelagert gehalten wird, ebenfalls entsprechend schmal. Insgesamt kann so die gesamte Konstruktion platzsparender ausgestaltet werden, wodurch das Arbeiten an schwer zugänglichen engen Stellen vereinfacht wird.

Die Feder 248 spannt zusätzlich die beiden Presssegmente 212a, 212b gegeneinander. Weiter weist der Presseinsatz 210 rotationssymmetrische Vertiefungen 228a, 228b als Ansetzmittel auf, mittels derer der Presseinsatz 210 in Verbindung mit einer Zugbacke 60 (siehe schematisch in Fig. 1e und 1f) als Pressschlinge eingesetzt werden kann. Ein Verriegelungsbolzen 250 sichert die schwenkbare Lagerung des Presseinsatzes 210 auf dem Hohlbolzen und dient gleichzeitig der Sicherung der Verbindung mit der Antriebspressbacke 230 über die Seitenplatte 276. Die Antriebspressbackenhälften 232a, 232b werden mittels Verriegelungsbolzen 262, 264 mit der Seitenplatte 276 verbunden und sind schwenkbar gelagert.

Der Presseinsatz 210 weist zudem Kopplungsmittel 218 in Form von Kopplungsstiften 218a, 218b mit Kopfenden 224a, 224b auf und die Antriebspressbacke 230 weist Kopplungselemente 238 in Form von teilweise offenen T-Nuten 238a, 238b auf. Die Kraftübertragungselemente 242 der Antriebspressbacke 230 sind als Anlageflächen 242a, 242b ausgebildet, die auf den als Anlageflächen 222a, 222b ausgebildeten Kraftübertragungsmitteln 222 des Presseinsatzes 210 anliegen. Bei dem Verpressen eines Fittings wird der Presseinsatz 210 zusammengedrückt, indem die durch das Presswerkzeug (nicht dargestellt) erzeugte Kraft über die Kraftübertragungselemente 242 und die Kraftübertragungsmittel 222 auf den Presseinsatz 210 übertragen wird. Vorliegend unterscheidet sich die Form des Presseinsatzes 210 von den vorangehend beschriebenen Presseinsätzen 10, 110 dadurch, dass die Abschnitte der Außenseite der Presssegmente 212a, 212b, die zwischen den Kopplungsmitteln 218 liegen, rund konstruiert sind, so dass diese Abschnitte der Presssegmente 212a, 212b in geschlossenem Zustand des Presseinsatzes 210 auf dem Radius eines gemeinsamen Kreises liegen.

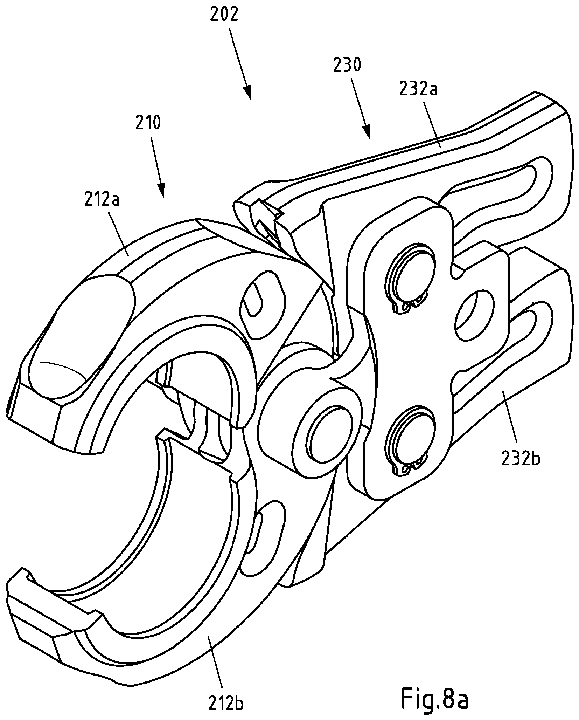

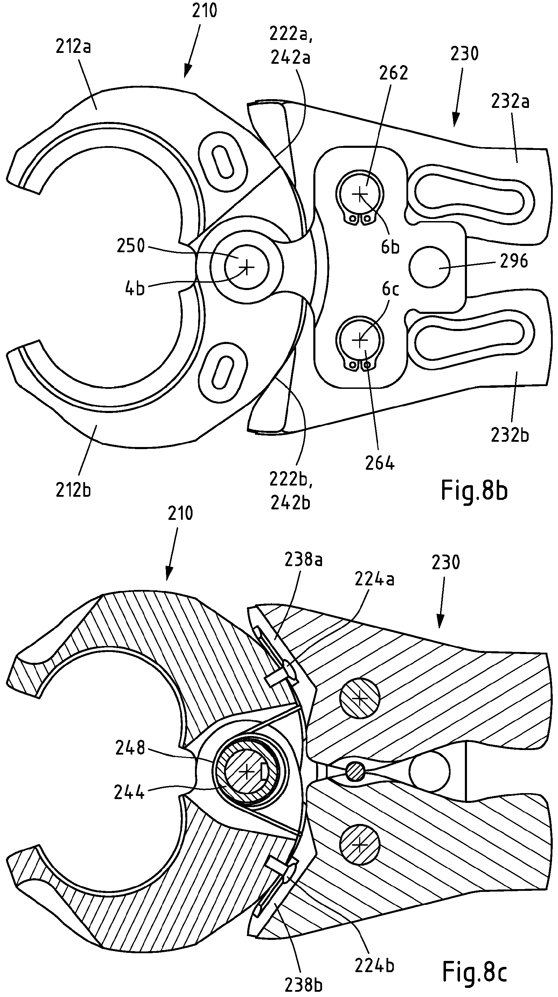

In Fig. 8a bis 8c ist die Pressbacke 202 nach Fig. 7 in geöffnetem Zustand gezeigt, wobei Fig. 8a eine perspektivische Ansicht, Fig. 8b eine seitliche Ansicht und Fig. 8c eine seitliche Schnittansicht zeigt. Ein Öffnen der Pressbacke 202 und somit des Presseinsatzes 210, so dass ein zu verpressendes Fitting mit dem Presseinsatz 210 umschlossen werden kann, wird durch ein Zusammendrücken der hinteren (vom Presseinsatz 210 wegweisenden) Enden der Antriebspressbackenhälften 232a, 232b erreicht.

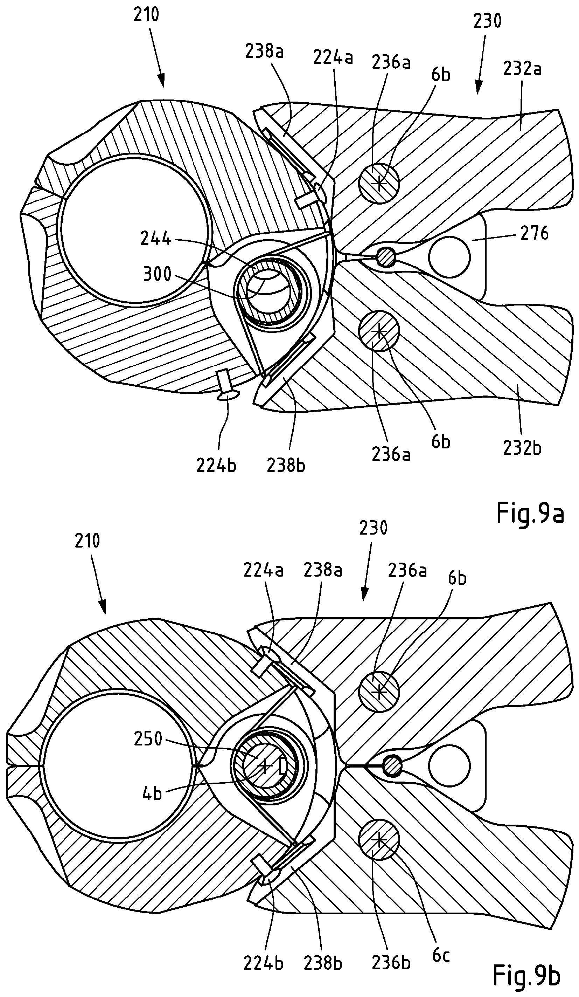

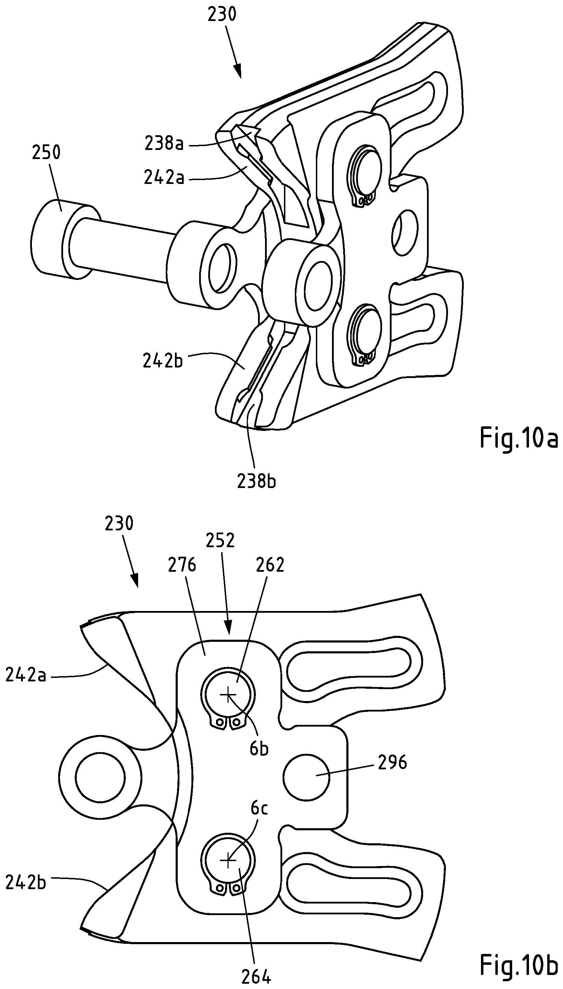

Fig.9a und 9b zeigen nun, in Zusammenschau mit den Fig. 10a und 10b die Pressbacke 202 nach Fig. 7a bis 7c beim Kopplungsvorgang des Presseinsatzes 210 mit der Antriebspressbacke 230. In Fig. 10a und 10b ist die Antriebspressbacke 230 nach Fig. 7a bis 7c ohne eingesetzten Presseinsatz 210 in einer perspektivischen Ansicht und in einer seitlichen Ansicht dargestellt.

Die Gelenkelemente 236 verbinden die Antriebspressbackenhälften 232a, 232b und ermöglichen ein Verschwenken der Antriebspressbackenhälften 232a, 232b um verschiedene Achsen 6b, 6c.

Durch die zwischen den Kopplungsmitteln 218 des Presseinsatzes 210 rund geformten Abschnitte der Presssegmente 212a, 212b, wird ermöglicht, dass die Schwenkbewegung des Presseinsatzes 210 zum Einkoppeln der Kopplungsmittel 218 in die Kopplungselemente 238 auf einer Kreisbahn erfolgt, ohne den Presseinsatz 210 zunächst aus der horizontalen Lage der Antriebspressbacke 230 zu verschwenken. Eine solche Handhabung ist für einen Anwender leichter umzusetzen, womit das Einkoppeln des Presseinsatzes 210 in die Antriebspressbacke 230 verbessert wird.

Ist die Öffnung des Hohlbolzens 244 des Presseinsatzes 210 deckungsgleich mit dem für die Lagerung des Presseinsatzes 210 vorgesehenen Lagerungsauge 300 der Seitenplatte 276 (Fig. 10a und 10b), kann der Verriegelungsbolzen 250, der die Schwenkachse 4b des Presseinsatzes 210 darstellt, zur Sicherung der Verbindung zwischen Presseinsatz 210 und Antriebspressbacke 230 eingeschoben werden. Gemäß Fig. 10a und Fig. 10b weist die Antriebspressbacke 230 Kopplungselemente 238 in Form von Hinterschneidungen aufweisenden teilweise geöffneten T-Nuten 238a, 238b auf und weist weiter Kraftübertragungselemente 242 in Form von Anlageflächen 242a, 242b auf. Vorliegend sind die T-Nuten 238a, 238b länger im Vergleich zu den T-Nuten 38a, 38b ausgestaltet, um eine Kopplung des Presseinsatzes 210 während der gesamten Öffnungsbewegung der Antriebspressbacke 230 zu gewährleisten.

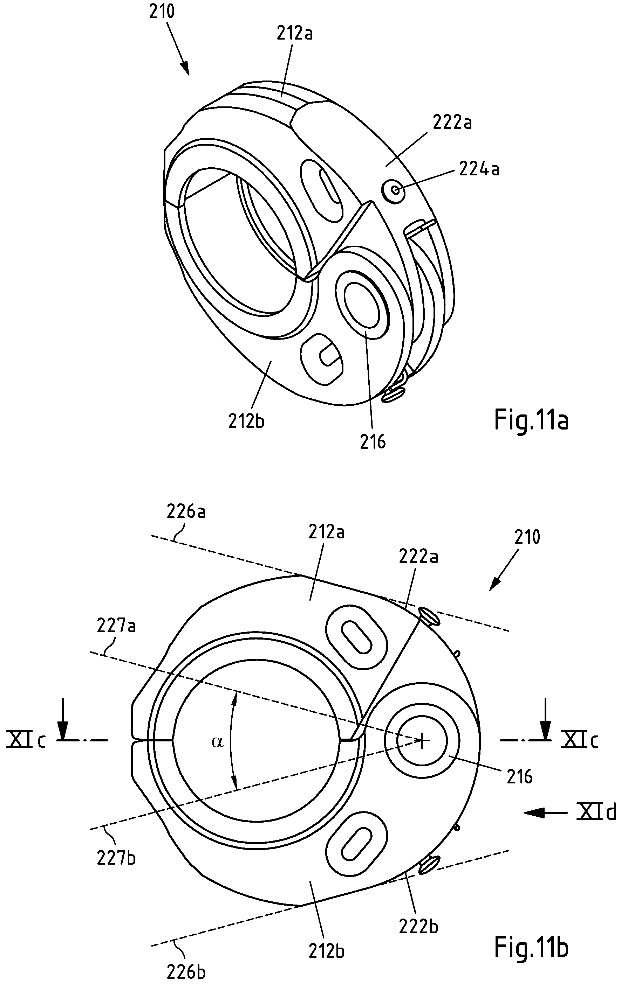

Fig. 11a-d zeigt den Presseinsatz 210 der Pressbacke nach Fig. 7, wobei in Fig. 11c eine Schnittansicht durch die in Fig. 11b eingezeichnete Schnittachse XIc dargestellt ist und wobei in Fig. 11d die in Fig. 11b durch die aus der Richtung XId angegebene Draufsicht auf die die Gelenkmittel 216 aufweisende Seite des Presseinsatzes 210 dargestellt ist.

In der in Fig. 11a gezeigten perspektivischen Ansicht und der in Fig. 11b gezeigten Schnittansicht sind die als Anlageflächen 222a, 222b ausgebildeten Kraftübertragungsmittel 222 des Presseinsatzes 210 gut ersichtlich. Durch diese Anlageflächen 222a, 222b und durch ebenfalls als Anlageflächen 242a, 242b ausgebildeten Kraftübertragungselemente 242 der Antriebspressbacke 230 wird eine flächige Kraftübertragung unabhängig von der Kopplung des Presseinsatzes 210 an die Antriebspressbacke 230 ermöglicht. Bei der Kraftübertragung gleitet die Außenseite der Presssegmente 212a, 212b entlang der Anlageflächen 242a, 242b ab und bewirkt durch eine Krafteinkopplung in den Presseinsatz 210 ein Verpressen des Fittings mit einem zu verpressenden Rohr.

Den als Anlageflächen 222a, 222b ausgebildeten Kraftübertragungsmitteln 222 kann eine Ebene 226a, 226b zugeordnet werden, so dass ein Winkel α zwischen den Ebenen 226a, 226b definiert werden kann. Vorliegend ist ein Winkel α von größer 25° (gemessen mithilfe der zu den Ebenen 226a, 226b parallel verlaufenden Ebenen 227a, 227b) gezeigt.

Anhand der in Fig. 11c und 11d gezeigten Darstellung ist die Feder 248 gezeigt, die den Hohlbolzen 244 axial sichert.

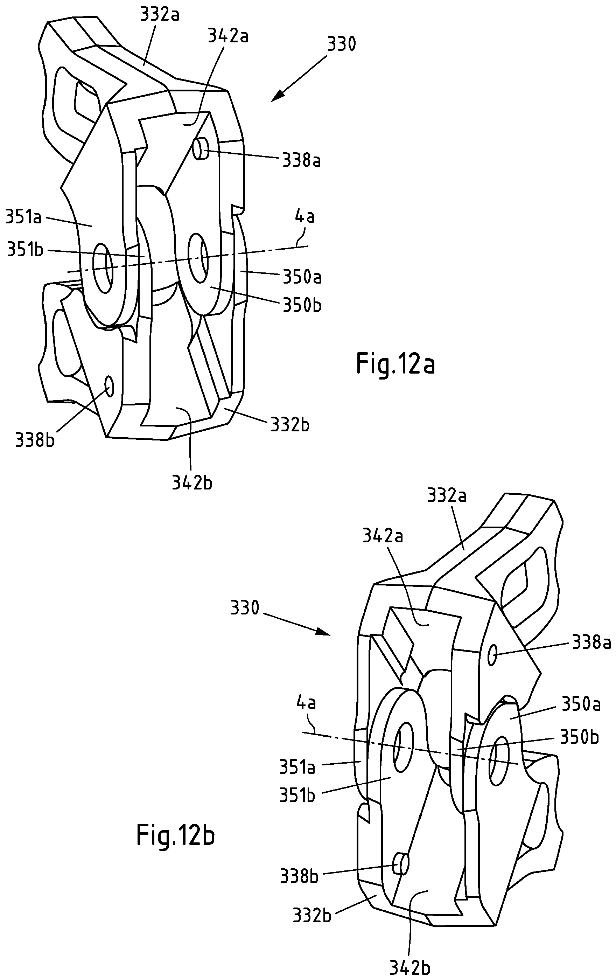

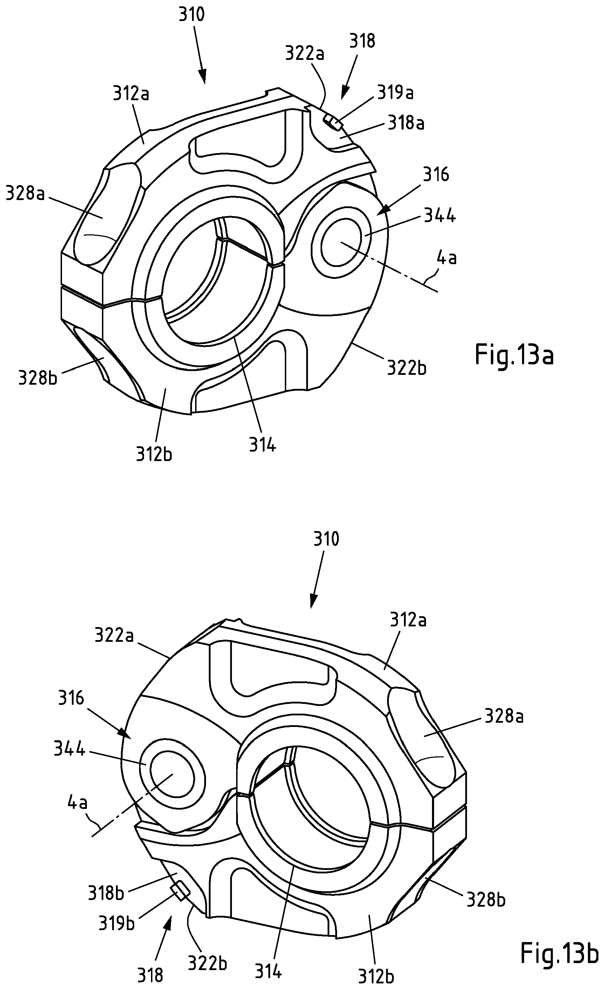

In Fig. 12a und 12b und Fig. 13a und 13b ist ein drittes Ausführungsbeispiel einer Pressbacke 302 aufweisend eine Antriebspressbacke 330 (Fig. 12) und einen Presseisatz 310 (Fig. 13a und 13b) dargestellt.

Fig. 12a und 12b zeigen zunächst ein drittes Ausführungsbeispiel einer Antriebspressbacke 330, die zwei Antriebspressbackenhälften 332a, 332b aufweist, die vorliegend um eine gemeinsame Achse 4a verschwenkbar gelagert sind. Weiter weist die Antriebspressbacke 330 Kopplungselemente 338 in Form von Kopplungsstiften 338a, 338b zum lösbaren Verbinden mit entsprechenden Kopplungsmitteln 318 eines Presseinsatzes 310 auf. Die Laschen 350a, 350b, 351a, 351b der Antriebspressbacke 330 weisen vorliegend kreisrunde Öffnungen zur Aufnahme von Gelenkmitteln, beispielsweise Hohlbolzen sowie ein Verriegelungsbolzen, zum lösbaren Verbinden der Antriebspressbacke 330 mit dem

Presseinsatz 310 auf. Vorliegend ist der Presseinsatz 310 um die gleiche verschwenkbare Achse 4a gelagert wie die Antriebspressbacke 330.

In Fig. 13a und 13b ist nun der Presseinsatz 310 mit zwei Presssegmenten 312a, 312b dargestellt, in denen eine Presskontur 314 ausgebildet ist. Des Weiteren sind Ansetzmittel 328 in Form von rotationssymmetrischen Vertiefungen 328a, 328b gezeigt, in die die Zugmittel 74a, 74b einer Zugbacke 60 eingreifen, sowie Gelenkmittel 316 in Form eines Hohlbolzens 344 gezeigt, wobei der Hohlbolzen 344 den Presseinsatz 310 verschwenkbar um die mit der Antriebspressbacke 330 gemeinsame Achse 4a lagert.

Der Presseinsatz 310 weist weiter Kopplungsmittel 318 zur lösbaren Aufnahme der Kopplungselemente 338 der Antriebspressbacke 330 in Form von Ausnehmungen 318a, 318b auf. Die Ausnehmungen 318a, 318b sind derart ausgestaltet, dass die vorstehenden Kopplungsstifte 338a, 338b beim Kopplungsvorgang des Presseinsatzes 310 mit der Antriebspressbacke 330 durch Anlage in die Ausnehmungen 318a, 318b eingreifen.

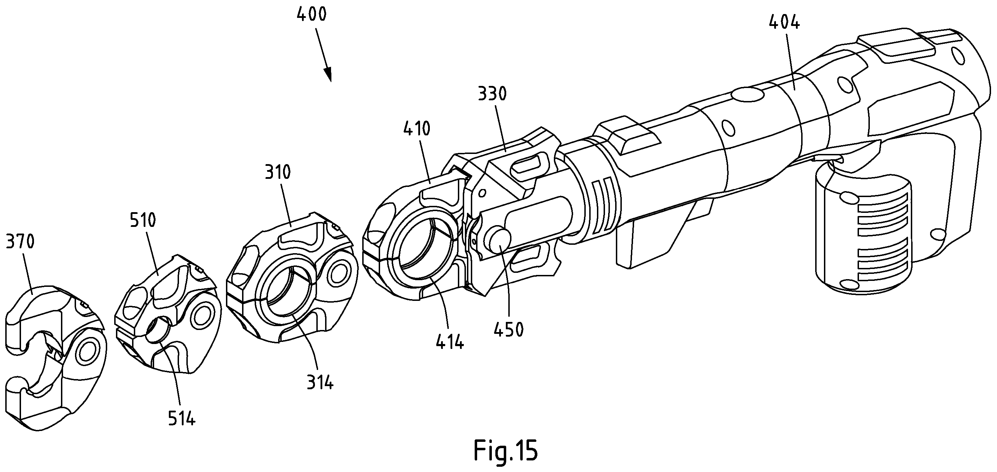

Die Kopplungsstifte 338a, 338 sind dazu an zwei sich gegenüberliegenden Innenseiten der Antriebspressbackenhälften 332a, 332b der Antriebspressbacke 330 vorgesehen. Die als Kopplungsmittel 318 dienenden Ausnehmungen 318a, 318b sind an zwei sich gegenüberliegenden Stellen an den Außenseiten der Presssegmente 312a, 312b des Presseinsatzes 310 ausgebildet. Die Ausnehmungen 318a, 318b sind dabei vollständig in einem Bereich zwischen der Mitte der Presskontur 314 des Presseinsatzes 310 und den Gelenkmitteln 316 des Presseinsatzes 310 und in einer Richtung senkrecht zur horizontal ausgerichteten Antriebspressbacke 330 mit verbundenem Presseinsatz 310 (siehe Fig. 15) über und unter den Gelenkmitteln 316 des Presseinsatzes 310 angeordnet.

Durch eine solche Ausgestaltung der Ausnehmungen 318a, 318b ergibt sich in einer Ausnehmung 318a, 318b jeweils ein Vorsprung 319a, 319b, den die Kopplungsstifte 338a, 338b beim Kopplungsvorgang des Presseinsatzes 310 mit der Antriebspressbacke 330 hintergreifen, die Kopplungsstifte 338a, 338b liegen an dem Vorsprung 319a, 319b an und passen formschlüssig in die durch die Ausnehmungen 318a, 318b geformten Nuten.

Der Kopplungsvorgang sowie die Kraftübertragung zwischen Antriebspressbacke 330 und Presseinsatz 310 erfolgt analog zu dem bereits anhand der Fig. 2 bis 4 illustrierten ersten Ausführungsbeispiel einer Pressbacke 2 mit Antriebspressbacke 30 und Presseinsatz 10. Beispielsweise können die Kraftübertragungselemente 342 der Antriebspressbacke 330 und die Kraftübertragungsmittel 322 des Presseinsatzes 310 als Anlageflächen ausgebildet sein. Auch die Gelenkmittel der Antriebspressbacke 330 können in Form von Hohlbolzen so ausgebildet sein. Somit kann ein Verriegelungsbolzen sowohl durch die Hohlbolzen der Antriebspressbacke 330 als auch durch den Hohlbolzen 344 des Presseinsatzes 310 nach dem Kopplungsvorgang hindurchgeschoben werden. Dadurch sichert der Verriegelungsbolzen die Verbindung von Antriebspressbacke 330 und Presseinsatz 310 und bildet die gemeinsame Schwenkachse 4a der Antriebspressbacke 330 und des Presseinsatzes 310.

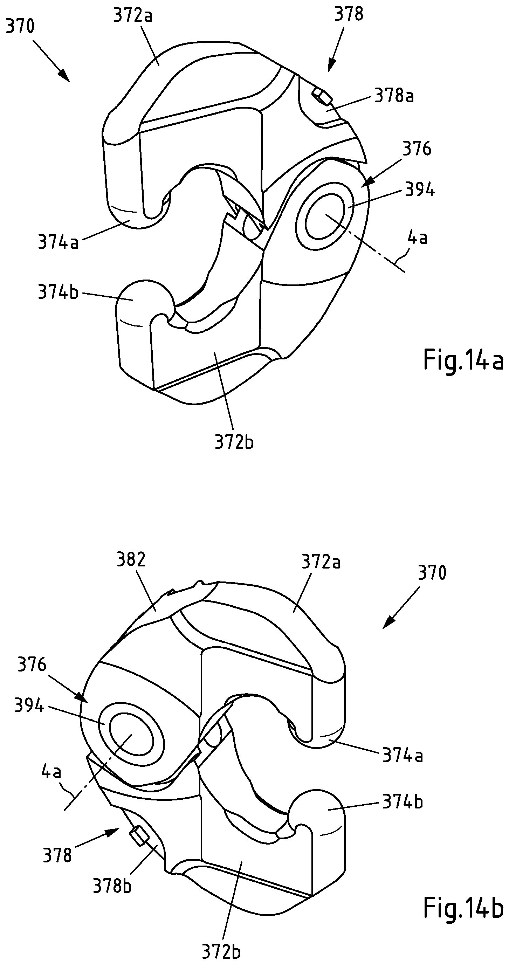

Fig. 14a und 14b zeigen ein Ausführungsbeispiel eines Zugeinsatzes 370, insbesondere zur Verbindung mit einer Antriebspressbacke 330 nach Fig. 12. Die Gelenkmittel 376 dienen dem Verbinden der Zugeinsatzhälften 372a, 372b. Weiter sind Kopplungsmittel 378 zum lösbaren Verbinden mit der Antriebspressbacke 330, hier in Form von Ausnehmungen 378a, 378b, vorgesehen. Die Kopplungsmittel 378 kommen mit den als Kopplungsstifte 338a, 338b ausgebildeten Kopplungselementen 338 der Antriebspressbacke 330 durch ein Hintergreifen der Kopplungsstifte 338a, 338b in Anlage.

Die Zugeinsatzhälften 372a, 372b weisen jeweils den Gelenkmitteln 376 gegenüber liegend ausgebildete Zugmittel 374a, 374b auf. Mithilfe der Zugmittel 374a, 374b, die in die Ansetzmittel 28, 128, 228, 328 eines (nicht in Fig. 14 dargestellten) Presseinsatzes 10, 110, 210, 310 eingreifen, und einer Antriebspressbacke 330 nach Fig. 12 kann der Presseinsatz 10, 110, 210, 310 verpresst werden. In diesem Fall dient der Presseinsatz 10, 110, 210, 310 als Pressschlinge und ein Verpressen von Fittings in schwer zugänglichen oder räumlich begrenzten Arbeitsbereichen wird vereinfacht. Auf diese Weise sind die Kopplungselemente 338 der Antriebspressbacke 330 zum lösbaren Verbinden einerseits mit einem Zugeinsatz 370 als Zugbacke 60 (wie schematisch in Fig. 1e und 1f dargestellt) und andererseits mit einem Presseinsatz 310 als Pressbacke 302 verwendbar. Somit wird die Anzahl der Werkzeuge, die auf der Baustelle zum Verpressen von Fittings mit Rohren vorgehalten werden muss, reduziert und das Verpressen vereinfacht.

Die Kraftübertragung von der Antriebspressbacke 330 auf den Zugeinsatz 370 erfolgt analog zu den vorangehenden Ausführungsbeispielen der Pressbacken 2, 102, 202, 302, mittels Kraftübertragungselementen 342 der Antriebspressbacke 330 und Kraftübertragungsmitteln 382 des Zugeinsatzes 370. Die Gelenkmittel 376 des Zugeinsatzes 370 sind als Hohlbolzen 394 ausgebildet, der die beiden Zugeinsatzhälften 372a, 372b um eine gemeinsame Schwenkachse 4a schwenkbar lagert. Die Schwenkachse 4a ist eine mit den Antriebspressbackenhälften 332a, 332b gemeinsame Schwenkachse 4a, so dass die Gelenkmittel 376 des Zugeinsatzes und die Gelenkmittel der Antriebspressbacke auf derselben Achse verschwenkbar gelagert sind.

Fig. 15 zeigt ein Ausführungsbeispiel eines Systems 400 für ein Verpressen von Fittings mit Rohren, wobei das System 400 einen Zugeinsatz 370 nach Fig. 14, einen ersten Presseinsatz 310 nach Fig. 13, einen zweiten Presseinsatz 410, einen dritten Presseinsatz 510 sowie eine Antriebspressbacke 330 nach Fig. 12 und weiter ein Presswerkzeug 404 umfasst. Die Presseinsätze 310, 410, 510 weisen jeweils unterschiedliche Presskonturen 314, 414, 514 auf, insbesondere für unterschiedliche Press-Dimensionen, beispielsweise mit Außenabmessungen von 12, 18 und 35 mm.

Das Presswerkzeug 404 ist mit der Antriebspressbacke 330 lösbar mittels eines Verriegelungsbolzens 450 verbunden. In vorteilhafter Weise kann die Antriebspressbacke 330 lösbar mittels der Kopplungselemente 338 mit einem der Presseinsätze 310, 410, 510 oder mit dem Zugeinsatz 370 verbunden werden, so dass mittels derselben Antriebspressbacke 330 sowohl eine Pressbacke wie auch eine Zugbacke bereitgestellt werden kann. Vorliegend ist ein Presseinsatz 410 mit der Antriebspressbacke 330 lösbar verbunden, so dass mit dem Presseinsatz 410 und mittels einer von dem Presswerkzeug 404 erzeugten und durch die Antriebspressbacke 330 auf den Presseinsatz 410 übertragenen Kraft ein Verpressen von Fittings mit Rohren erfolgen kann.

## Patentansprüche

1. Pressbacke (2, 102, 202, 302) für ein Verpressen von Fittings mit Rohren,
- mit einem Presseinsatz (10, 110, 210, 310, 410, 510) und
- mit einer Antriebspressbacke (30, 130, 230, 330),
- wobei der Presseinsatz (10, 110, 210, 310, 410, 510) aufweist:
- mindestens zwei Presssegmente (12a, 12b, 112a, 112b, 212a, 212b, 312a, 312b),
- eine in den Presssegmenten (12a, 12b, 112a, 112b, 212a, 212b, 312a, 312b) ausgebildete Presskontur (14, 114, 214, 314, 414, 514),
- Gelenkmittel (16, 116, 216, 250, 316) zum Verbinden der Presssegmente (12a, 12b, 112a, 112b, 212a, 212b, 312a, 312b),
- Kopplungsmittel (18, 218, 318) zum lösbaren Verbinden mit der Antriebspressbacke (30, 130, 230, 330) und
- Kraftübertragungsmittel (22, 222, 322),
- wobei die Antriebspressbacke (30, 130, 230, 330) aufweist:
- zwei Antriebspressbackenhälften (32a, 32b, 132a, 132b, 232a, 232b, 332a, 332b),
- Gelenkelemente (36, 236) zum Verbinden der Antriebspressbackenhälften (32a, 32b, 132a, 132b, 232a, 232b, 332a, 332b),
- Kopplungselemente (38, 238, 338) zum lösbaren Verbinden mit dem Presseinsatz (10, 110, 210, 310, 410, 510) und
- Kraftübertragungselemente (42, 242, 342),
**dadurch gekennzeichnet,**
- **dass** die Gelenkmittel (16, 116, 216, 250, 316) den Presseinsatz (10, 110, 210, 310, 410, 510) mit der Antriebspressbacke (30, 130, 230, 330) verschwenkbar verbinden und
- **dass** die Kraftübertragungsmittel (22, 222, 322) und die Kraftübertragungselemente (42, 242, 342) zumindest überwiegend, vorzugsweise vollständig in einem Bereich zwischen der Mitte der Presskontur (14, 114, 214) und den Gelenkmitteln (16, 116, 216, 250, 316) angeordnet sind.

2. Pressbacke (2, 302) nach Anspruch 1,
**dadurch gekennzeichnet,**
- **dass** die Kraftübertragungsmittel (22, 222, 322) als Anlageflächen (22a, 22b, 222a, 222b) ausgebildet sind,
- **dass** die Kraftübertragungselemente (42, 242, 342) als Anlageflächen (42a, 42b, 242a, 242b) ausgebildet sind und
- **dass** die Anlageflächen (22a, 22b, 222a, 222b) paarweise einen Winkel (α) größer 10°, vorzugsweise größer als 25°, insbesondere größer als 40°, besonders bevorzugt größer als 80° zueinander aufweisen.

3. Pressbacke (2, 302) nach Anspruch 1 oder 2,
**dadurch gekennzeichnet,**
**dass** der Presseinsatz (10, 110, 310, 410, 510) und die Antriebspressbackenhälften (32a, 32b, 332a, 332b) um eine gleiche Achse (4a) verschwenkbar sind.

4. Pressbacke (102, 202) nach einem der Ansprüche 1 bis 3,
**dadurch gekennzeichnet,**
**dass** der Presseinsatz (10, 210) und die Antriebspressbackenhälften (132a, 132b, 232a, 232b) um verschiedene Achsen (4b, 6a, 6b, 6c) verschwenkbar sind, wobei die Antriebspressbackenhälften (132a, 132b, 232a, 232b) eine gleiche Achse (6a) oder unterschiedliche Achsen (6b, 6c) aufweisen.

5. Pressbacke (2, 102, 202) nach einem der Ansprüche 1 bis 4,
**dadurch gekennzeichnet,**
- **dass** die Kopplungsmittel (18, 218) Kopplungsstifte (18a, 18b, 218a, 218b) mit Kopfenden (24a, 24b, 224a, 224b) aufweisen und
- **dass** die Kopplungselemente (38, 238) teilweise geöffnete T-Nuten (38a, 38b, 238a, 238b) aufweisen und die Kopplungsmittel (18, 218) aufnehmen.

6. Pressbacke (302) nach einem der Ansprüche 1 bis 4,
**dadurch gekennzeichnet,**
- **dass** die Kopplungselemente (338) Kopplungsstifte (338a, 338b) aufweisen und
- **dass** die Kopplungsmittel (318) Ausnehmungen (318a, 318b) aufweisen und die Kopplungselemente (338) aufnehmen.

7. Pressbacke (2, 102, 202, 302) nach einem der Ansprüche 1 bis 6,
**dadurch gekennzeichnet,**
**dass** der Presseinsatz (10, 110, 210, 310, 410, 510) nach einem der Ansprüche15 bis 22 ausgebildet ist.

8. Pressbacke (2, 102, 202, 302) nach einem der Ansprüche 1 bis 7,
**dadurch gekennzeichnet,**
**dass** die Antriebspressbacke (30, 130, 230, 330) nach einem der Ansprüche 9 bis 14 ausgebildet ist.

9. Antriebspressbacke (30, 130, 230, 330) für ein Verpressen von Fittings mit Rohren mittels eines Presseinsatzes (10, 110, 210, 310, 410, 510),
- mit zwei Antriebspressbackenhälften (32a, 32b, 132a, 132b, 232a, 232b, 332a, 332b),
- mit Gelenkelementen (36, 236) zum Verbinden der Antriebspressbackenhälften (32a, 32b, 132a, 132b, 232a, 232b, 332a, 332b),
- mit Kopplungselementen (38, 238, 338) zum lösbaren Verbinden mit einem Presseinsatz (10, 110, 210, 310, 410, 510) und
- mit Kraftübertragungselementen (42, 242, 342),
- wobei die Gelenkelemente (36, 236) ein Verschwenken der Antriebspressbackenhälften (32a, 32b, 132a, 132b, 232a, 232b, 332a, 332b) um eine gemeinsame Achse (4a, 6a) oder um zwei verschiedene Achsen (6b, 6c) ermöglichen,
**dadurch gekennzeichnet,**
- **dass** Verbindungselemente (52, 252) zum verschwenkbaren Verbinden des Presseinsatzes (10, 110, 210, 310, 410, 510) vorgesehen sind und
- **dass** die Kraftübertragungselemente (42, 242, 342) zumindest überwiegend, vorzugsweise vollständig in einem Bereich zwischen der Mitte der Presskontur (12, 114, 214) des zu verbindenden Presseinsatzes (10, 110, 210, 310, 410, 510) und den Gelenkmitteln (16, 116, 216, 250, 316) des zu verbindenden Presseinsatzes (10, 110, 210, 310, 410, 510) angeordnet sind.

10. Antriebspressbacke (30, 130, 230, 330) nach Anspruch 9,
**dadurch gekennzeichnet,**
- **dass** die Kraftübertragungselemente (42, 242, 342) als Anlageflächen (42a, 42b, 242a, 242b) ausgebildet sind und
- **dass** die Anlageflächen (42a, 42b, 242a, 242b) einen Winkel (α) größer 10°, vorzugsweise größer als 25°, insbesondere größer als 40°, besonders bevorzugt größer als 80° zueinander aufweisen.

11. Antriebspressbacke (30, 330) nach Anspruch 9 oder 10,
**dadurch gekennzeichnet,**
**dass** die Verbindungselemente (52) und die Gelenkelemente (36) eine gleiche Achse (4a) (Drehachse) aufweisen.

12. Antriebspressbacke (130, 230) nach einem der Ansprüche 9 bis 11,
**dadurch gekennzeichnet,**
**dass** die Verbindungselemente (252) und die Gelenkelemente (236) verschiedene Achsen (4b, 6a, 6b, 6c) aufweisen, wobei die Gelenkelemente (236) ein Verschwenken der Antriebspressbackenhälften (132a, 132b, 232a, 232b) um eine gemeinsame Achse (6a) oder um verschiedene Achsen (6b, 6c) ermöglichen.

13. Antriebspressbacke (30, 130, 230) nach einem der Ansprüche 9 bis 12,
**dadurch gekennzeichnet,**
- **dass** die Kopplungselemente (38, 238) zur lösbaren Aufnahme von Kopplungsmitteln (18, 218) des Presseinsatzes (10, 110, 210) teilweise geöffnete T-Nuten (38a, 38b, 238a, 238b) aufweisen und
- **dass** die Kraftübertragungselemente (42, 242, 342) als Anlageflächen (42a, 42b, 242a, 242b) ausgebildet sind.

14. Antriebspressbacke (330) nach einem der Ansprüche 9 bis 12,
**dadurch gekennzeichnet,**
**dass** die Kopplungselemente (338) Kopplungsstifte (338a, 338b) aufweisen.

15. Presseinsatz (10, 110, 210, 310, 410, 510) für ein Verpressen von Fittings mit Rohren,
- mit mindestens zwei Presssegmenten (12a, 12b, 112a, 112b, 212a, 212b, 312a, 312b),
- mit in den Presssegmenten (12a, 12b, 112a, 112b, 212a, 212b, 312a, 312b) ausgebildeten Presskonturen (14, 114, 214),
- mit Gelenkmitteln (16, 116, 216, 250, 316) zum Verbinden der Presssegmente (12a, 12b, 112a, 112b, 212a, 212b, 312a, 312b),
- mit Kopplungsmitteln (18, 218, 318) zum lösbaren Verbinden mit einer Antriebspressbacke (30, 130, 230, 330) und
- mit Kraftübertragungsmitteln (22, 222, 322),
**dadurch gekennzeichnet,**
- **dass** die Presssegmente (12a, 12b, 112a, 112b, 212a, 212b, 312a, 312b) Ansetzmittel (28, 128, 228, 328) zum Ansetzen einer Zugbacke (60) aufweisen.

16. Presseinsatz (10, 110, 210, 310, 410, 510) nach Anspruch 15,
**dadurch gekennzeichnet,**
**dass** die Ansetzmittel (28, 128, 228, 328)in den Presssegmenten (12a, 12b, 112a, 112b, 212a, 212b, 312a, 312b) als Vertiefungen (28a, 28b, 128a, 128b, 228a, 228b, 328a, 328b) zur Aufnahme von Zugmitteln (74a, 74b, 374a, 374b) der Zugbacke (60) ausgebildet sind.

17. Presseinsatz (10, 110, 210, 310, 410, 510) nach Anspruch 15 oder 16,
**dadurch gekennzeichnet,**
**dass** die Vertiefungen (28a, 28b, 128a, 128b, 228a, 228b) ein Ansetzen der Zugmittel (74a, 74b, 374a, 374b) in mindestens zwei, vorzugsweise mehreren unterschiedlichen Winkeln bezogen auf die Achse des zu verpressenden Rohres ermöglichen.

18. Presseinsatz (10, 110, 210, 310, 410, 510) nach einem der Ansprüche 15 bis 17,
**dadurch gekennzeichnet,**
**dass** die Gelenkmittel (16, 116, 216, 250, 316) ein verschwenkbares Befestigen des Presseinsatzes (10, 110, 210) an einer Antriebspressbacke (30, 130, 230, 330) ermöglichen.

19. Presseinsatz (10, 110, 210, 310, 410, 510) nach einem der Ansprüche 15 bis 18,
**dadurch gekennzeichnet,**
**dass** die Kraftübertragungsmittel (22, 222, 322) als Anlageflächen (22a, 22b, 222a, 222b) ausgebildet sind.

20. Presseinsatz (10, 110, 210) nach einem der Ansprüche 15 bis 19,
**dadurch gekennzeichnet,**
- **dass** die Kopplungsmittel (18, 218) Kopplungsstifte (18a, 18b, 218a, 218b) aufweisen und
- **dass** die Kopplungsstifte (18a, 18b, 218a, 218b) mit Kopfenden (24a, 24b, 224a, 224b) versehen sind.

21. Presseinsatz (310, 410, 510) nach einem der Ansprüche 15 bis 19,
**dadurch gekennzeichnet,**
- **dass** die Kopplungsmittel (318) zur lösbaren Aufnahme von Kopplungselementen (338) der Antriebspressbacke (330) Ausnehmungen (318a, 318b) aufweisen.

22. Presseinsatz (10, 110, 210, 31, 410, 510) nach einem der Ansprüche 15 bis 21,
**dadurch gekennzeichnet,**
**dass** eine elastische Feder (48, 248) zum Schließen der Presssegmente (12a, 12b, 112a, 112b, 212a, 212b) vorgesehen ist.

23. System (100, 400) für ein Verpressen von Fittings mit Rohren,
- mit mindestens zwei Presseinsätzen (10, 110, 210, 310, 410, 510) und
- mit einer Antriebspressbacke (30, 130, 230, 330),
- wobei die Presseinsätze (10, 110, 210, 310, 410, 510) aufweisen:
- mindestens zwei Presssegmente (12a, 12b, 112a, 112b, 212a, 212b, 312a, 312b),
- in den Presssegmenten (12a, 12b, 112a, 112b, 212a, 212b, 312a, 312b) ausgebildete Presskonturen (14, 114, 214, 314, 414, 514),
- Gelenkmittel (16, 116, 216, 250, 316) zum Verbinden der Presssegmente (12a, 12b, 112a, 112b, 212a, 212b, 312a, 312b),
- Kopplungsmittel (18, 218, 318) zum lösbaren Verbinden mit der Antriebspressbacke (30, 130, 230, 330) und
- Kraftübertragungsmittel (22, 222, 322),
- wobei die mindestens zwei Presseinsätze (10, 110, 210, 310, 410, 510) unterschiedliche Presskonturen (14, 114, 214, 314, 414, 514) aufweisen und
- wobei die Antriebspressbacke (30, 130, 230, 330) aufweist:
- zwei Antriebspressbackenhälften (32a, 32b, 132a, 132b, 232a, 232b, 332a, 332b),
- Gelenkelemente (36, 236) zum Verbinden der Antriebspressbackenhälften (32a, 32b, 132a, 132b, 232a, 232b, 332a, 332b),
- Kopplungselemente (38, 238, 338) zum lösbaren Verbinden mit dem Presseinsatz (10, 110, 210, 310, 410, 510) und
- Kraftübertragungselemente (42, 242, 342),
**dadurch gekennzeichnet,**
- **dass** mindestens ein Presseinsatz (10, 110, 210, 310, 410, 510) Ansetzmittel (28, 128, 228, 338) zum Ansetzen einer Zugbacke (60) aufweist,
- **dass** ein Zugeinsatz (70, 370) vorgesehen ist und aufweist:
- zwei Zugeinsatzhälften (72a, 72b),
- Gelenkmittel (76, 376) zum Verbinden der Zugeinsatzhälften (72a, 72b, 372a, 372b),
- Kopplungsmittel (78, 378) zum lösbaren Verbinden mit der Antriebspressbacke (30, 130, 230, 330) und
- Kraftübertragungsmittel (82, 382) und
- den Gelenkmitteln (76, 376) gegenüberliegend ausgebildete Zugmittel (74a, 74b, 374a, 374b),
- wobei die Kopplungsmittel (78, 378) und die Kraftübertragungsmittel (82, 382) an der Außenseite der Zugeinsatzhälften (72a, 72b, 372a, 372b) angeordnet sind, und
- **dass** der Zugeinsatz (70, 370) und die Antriebspressbacke (30, 130, 230, 330) die Zugbacke (60) bilden.

24. System (100, 400) nach Anspruch 23,
**dadurch gekennzeichnet,**
**dass** die Zugmittel (74a, 74b, 374a, 374b) ein Ansetzen in den Ansetzmitteln (28, 128, 228, 338) in mindestens zwei, vorzugsweise mehreren unterschiedlichen Winkeln bezogen auf die Achse des zu verpressenden Rohres ermöglichen.

25. System (100, 400) nach Anspruch 23 oder 24,
**dadurch gekennzeichnet,**
**dass** die Antriebspressbacke (30, 130, 230, 330) nach einem der Ansprüche 9 bis 14 ausgebildet ist und/oder
**dass** der Presseinsatz (10, 110, 210, 310, 410, 510) nach einem der Ansprüche 15 bis 22 ausgebildet ist.

## Claims

1. Press jaw (2, 102, 202, 302) for pressing fittings with pipes,
- with a press insert (10, 110, 210, 310, 410, 510) and
- with a drive press jaw (30, 130, 230, 330),
- wherein the press insert includes (10, 110, 210, 310, 410, 510):
- at least two press segments (12a, 12b, 112a, 112b, 212a, 212b, 312a, 312b),
- a press contour (14, 114, 214, 314, 414, 514) formed in the press segments (12a, 12b, 112a, 112b, 212a, 212b, 312a, 312b),
- joint means (16, 116, 216, 250, 316) for connecting the press segments (12a, 12b, 112a, 112b, 212a, 212b, 312a, 312b),
- coupling means (18, 218, 318) for releasably connecting with the drive press jaw (30, 130, 230, 330); and
- power transmission means (22, 222, 322),
- wherein the drive press jaw (30, 130, 230, 330) has:
- two drive press jaw halves (32a, 32b, 132a, 132b, 232a, 232b, 332a, 332b),
- joint elements (36, 236) for connecting the drive press jaw halves (32a, 32b, 132a, 132b, 232a, 232b, 332a, 332b),
- coupling elements (38, 238, 338) for releasably connecting with the press insert (10, 110, 210, 310, 410, 510) and
- force transmission elements (42, 242, 342),
**characterised in**
- **that** the joint means (16, 116, 216, 250, 316) pivotably connect the press insert (10, 110, 210, 310, 410, 510) to the drive press jaw (30, 130, 230, 330), and
- **that** the force transmission means (22, 222, 322) and the force transmission elements (42, 242, 342) are arranged at least predominantly, preferably completely, in an area between the center of the press contour (14, 114, 214) and the joint means (16, 116, 216, 250, 316).

2. Press jaw (2, 302) according to claim 1,
**characterized in,**
- **that** the force transmission means (22, 222, 322) are formed as contact surfaces (22a, 22b, 222a, 222b),
- **that** the force transmission elements (42, 242, 342) are formed as contact surfaces (42a, 42b, 242a, 242b), and
- **that** the contact surfaces (22a, 22b, 222a, 222b) in pairs have an angle (α) greater than 10°, preferably greater than 25°, in particular greater than 40°, particularly preferably greater than 80° to one another.

3. Press jaw (2, 302) according to claim 1 or 2,
**characterized in,**
**that** the press insert (10, 110, 310, 410, 510) and the drive press jaw halves (32a, 32b, 332a, 332b) are pivotable about a same axis (4a).

4. Press jaw (102, 202) according to any one of claims 1 to 3,
**characterized in,**
**that** the press insert (10, 210) and the drive press jaw halves (132a, 132b, 232a, 232b) are pivotable about different axes (4b, 6a, 6b, 6c), wherein the drive press jaw halves (132a, 132b, 232a, 232b) having an identical axis (6a) or different axes (6b, 6c).

5. Press jaw (2, 102, 202) according to any one of claims 1 to 4,
**characterized in,**
- **that** the coupling means (18, 218) include coupling pins (18a, 18b, 218a, 218b) having head ends (24a, 24b, 224a, 224b), and
- **that** the coupling elements (38, 238) have partially opened T-grooves (38a, 38b, 238a, 238b) and receive the coupling means (18, 218).

6. Press jaw (302) according to any one of claims 1 to 4,
**characterized in,**
- **that** the coupling elements (338) include coupling pins (338a, 338b) and
- **that** the coupling means (318) include recesses (318a, 318b) and receive the coupling elements (338).

7. Press jaw (2, 102, 202, 302) according to any one of claims 1 to 6,
**characterized in,**
**that** the press insert (10, 110, 210, 310, 410, 510) is formed according to any one of claims 15 to 22.

8. Press jaw (2, 102, 202, 302) according to any one of claims 1 to 7,
**characterized in,**
**that** the drive press jaw (30, 130, 230, 330) is formed according to one of the claims 9 to 14.

9. Drive press jaw (30, 130, 230, 330) for pressing fittings with pipes by means of a press insert (10, 110, 210, 310, 410, 510),
- with two drive press jaw halves (32a, 32b, 132a, 132b, 232a, 232b, 332a, 332b),
- with joint elements (36, 236) for connecting the drive press jaw halves (32a, 32b, 132a, 132b, 232a, 232b, 332a, 332b),
- with coupling elements (38, 238, 338) for releasably connecting with a press insert (10, 110, 210, 310, 410, 510) and
- with power transmission elements (42, 242, 342),
- wherein the joint elements (36, 236) enable the drive press jaw halves (32a, 32b, 132a, 132b, 232a, 232b, 332a, 332b) to pivot about a common axis (4a, 6a) or about two different axes (6b, 6c),
**characterised in,**
- **that** connecting elements (52, 252) are provided for pivotably connecting the press insert (10, 110, 210, 310, 410, 510), and
- **that** the force transmission elements (42, 242, 342) are arranged at least predominantly, preferably completely, in an area between the center of the press contour (12, 114, 214) of the press insert (10, 110, 210, 310, 410, 510) to be connected and the joint means (16, 116, 216, 250, 316) of the press insert (10, 110, 210, 310, 410, 510) to be connected.

10. Drive press jaw (30, 130, 230, 330) according to claim 9,
**characterized in,**
- **that** the force transmission elements (42, 242, 342) are formed as contact surfaces (42a, 42b, 242a, 242b), and
- **that** the contact surfaces (42a, 42b, 242a, 242b) have an angle (α) greater than 10°, preferably greater than 25°, in particular greater than 40°, particularly preferably greater than 80° to one another.

11. Drive press jaw (30, 330) according to claim 9 or 10,
**characterized in,**
**that** the connecting elements (52) and the joint elements (36) have the same axis (4a) (axis of rotation).

12. Drive press jaw (130, 230) according to any one of claims 9 to 11,
**characterized in,**
**that** the connecting elements (252) and the joint elements (236) have different axes (4b, 6a, 6b, 6c), the joint elements (236) enabling the drive press jaw halves (132a, 132b, 232a, 232b) to pivot about a common axis (6a) or about different axes (6b, 6c).

13. Drive press jaw (30, 130, 230) according to any one of claims 9 to 12, **characterized in,**
- **that** the coupling elements (38, 238) for releasably receiving coupling means (18, 218) of the press insert (10, 110, 210) have partially opened T-grooves (38a, 38b, 238a, 238b), and
- **that** the force transmitting elements (42, 242, 342) are formed as contact surfaces (42a, 42b, 242a, 242b).

14. Drive press jaw (330) according to any one of claims 9 to 12,
**characterized in**
**that** the coupling elements (338) include coupling pins (338a, 338b).

15. Press insert (10, 110, 210, 310, 410, 510) for pressing fittings with pipes,
- with at least two press segments (12a, 12b, 112a, 112b, 212a, 212b, 312a, 312b),
- with press contours (14, 114, 214) formed in the pressing segments (12a, 12b, 112a, 112b, 212a, 212b, 312a, 312b),
- with joint means (16, 116, 216, 250, 316) for connecting the press segments (12a, 12b, 112a, 112b, 212a, 212b, 312a, 312b),
- with coupling means (18, 218, 318) for releasably connecting with a drive press jaw (30, 130, 230, 330) and
- with power transmission means (22, 222, 322),
**characterised in,**
- **that** the press segments (12a, 12b, 112a, 112b, 212a, 212b, 312a, 312b) include attachment means (28, 128, 228, 328) for attaching a pull jaw (60).

16. Press insert (10, 110, 210, 310, 410, 510) according to claim 15,
**characterized in,**
**that** the attachment means (28, 128, 228, 328) in the press segments (12a, 12b, 112a, 112b, 212a, 212b, 312a, 312b) are formed as recesses (28a, 28b, 128a, 128b, 228a, 228b, 328a, 328b) for receiving pull means (74a, 74b, 374a, 374b) of the pull jaw (60).

17. Press insert (10, 110, 210, 310, 410, 510) according to claim 15 or 16,
**characterized in,**
**that** the recesses (28a, 28b, 128a, 128b, 228a, 228b) enable the pull means (74a, 74b, 374a, 374b) to be applied at at least two, preferably several, different angles in relation to the axis of the pipe to be pressed.

18. Press insert (10, 110, 210, 310, 410, 510) according to any one of claims 15 to 17,
**characterized in,**
**that** the joint means (16, 116, 216, 250, 316) enable the press insert (10, 110, 210) to be pivotably attached to a drive press jaw (30, 130, 230, 330).

19. Press insert (10, 110, 210, 310, 410, 510) according to any one of claims 15 to 18,
**characterized in,**
**that** the force transmission means (22, 222, 322) are formed as contact surfaces (22a, 22b, 222a, 222b).

20. Press insert (10, 110, 210) according to any one of claims 15 to 19,
**characterized in,**
- **that** the coupling means (18, 218) include coupling pins (18a, 18b, 218a, 218b) and
- **that** the coupling pins (18a, 18b, 218a, 218b) are provided with head ends (24a, 24b, 224a, 224b).

21. Press insert (310, 410, 510) according to any one of claims 15 to 19,
**characterized in,**
**that** the coupling means (318) include recesses (318a, 318b) for releasably receiving coupling elements (338) of the drive press jaw (330).

22. Press insert (10, 110, 210, 31, 410, 510) according to any one of claims 15 to 21,
**characterized in,**
**that** an elastic spring (48, 248) is provided for closing the press segments (12a, 12b, 112a, 112b, 212a, 212b).

23. System (100, 400) for crimping fittings with pipes,
- with at least two press inserts (10, 110, 210, 310, 410, 510) and
- with a drive press jaw (30, 130, 230, 330),
- wherein the press inserts have (10, 110, 210, 310, 410, 510):
- at least two press segments (12a, 12b, 112a, 112b, 212a, 212b, 312a, 312b),
- press contours (14, 114, 214, 314, 414, 514) formed in the press segments (12a, 12b, 112a, 112b, 212a, 212b, 312a, 312b),
- joint means (16, 116, 216, 250, 316) for connecting the press segments (12a, 12b, 112a, 112b, 212a, 212b, 312a, 312b),
- coupling means (18, 218, 318) for releasably connecting with the drive press jaw (30, 130, 230, 330); and
- power transmission means (22, 222, 322),
- wherein the at least two press inserts (10, 110, 210, 310, 410, 510) have different press contours (14, 114, 214, 314, 414, 514) and
- wherein the drive press jaw (30, 130, 230, 330) has:
- two drive press jaw halves (32a, 32b, 132a, 132b, 232a, 232b, 332a, 332b),
- joint elements (36, 236) for connecting the drive press jaw halves (32a, 32b, 132a, 132b, 232a, 232b, 332a, 332b),
- coupling elements (38, 238, 338) for detachably connecting with the press insert (10, 110, 210, 310, 410, 510) and
- force transmission elements (42, 242, 342),
**characterised in,**
- **that** at least one press insert (10, 110, 210, 310, 410, 510) has attachment means (28, 128, 228, 338) for attaching a pull jaw (60),
- **that** a pull insert (70, 370) is provided and includes:
- two pull insert halves (72a, 72b),
- joint means (76, 376) for connecting the pull insert halves (72a, 72b, 372a, 372b),
- coupling means (78, 378) for releasably connecting with the drive press jaw (30, 130, 230, 330),
- power transmission means (82, 382) and
- pull means (74a, 74b, 374a, 374b) opposite the joint means (76, 376),
- wherein the coupling means (78, 378) and the force transmitting means (82, 382) are arranged on the outside of the pull insert halves (72a, 72b, 372a, 372b), and
- **that** the pull insert (70, 370) and the drive press jaw (30, 130, 230, 330) form the pull jaw (60).

24. System (100, 400) according to claim 23,
**characterized in,**
**that** the pull means (74a, 74b, 374a, 374b) enable to be attached in the attachment means (28, 128, 228, 338) at at least two, preferably several, different angles in relation to the axis of the pipe to be pressed.

25. System (100, 400) according to claim 23 or 24,
**characterised in,**
**that** the drive press jaw (30, 130, 230, 330) is formed according to one of claims 9 to 14 and/or
**that** the press insert (10, 110, 210, 310, 410, 510) is formed according to any one of claims 15 to 22.

## Revendications

1. Mâchoire de presse (2, 102, 202, 302) pour une compression de raccords avec des tubes,
- avec un insert de presse (10, 110, 210, 310, 410, 510) et
- avec une mâchoire de presse d'entraînement (30, 130, 230, 330),
- dans laquelle l'insert de presse (10, 110, 210, 310, 410, 510) comprend :
- au moins deux segments de presse (12a, 12b, 112a, 112b, 212a, 212b, 312a, 312b),
- un contour de presse (14, 114, 214, 314, 414, 514) constitué dans les segments de presse (12a, 12b, 112a, 112b, 212a, 212b, 312a, 312b),
- des moyens d'articulation (16, 116, 216, 250, 316) pour la liaison des segments de presse (12a, 12b, 112a, 112b, 212a, 212b, 312a, 312b),
- des moyens d'accouplement (18, 218, 318) pour la liaison libérable à la mâchoire de presse d'entraînement (30, 130, 230, 330) et
- des moyens de transmission de force (22, 222, 322),
- dans laquelle la mâchoire de presse d'entraînement (30, 130, 230, 330) comprend :
- deux moitiés de mâchoire de presse d'entraînement (32a, 32b, 132a, 132b, 232a, 232b, 332a, 332b),
- des éléments d'articulation (36, 236) pour la liaison des moitiés de mâchoire de presse d'entraînement (32a, 32b, 132a, 132b, 232a, 232b, 332a, 332b),
- des éléments d'accouplement (38, 238, 338) pour la liaison libérable à l'insert de presse (10, 110, 210, 310, 410, 510) et
- des éléments de transmission de force (42, 242, 342),
**caractérisée**
- **en ce que** les moyens d'articulation (16, 116, 216, 250, 316) relient de manière pivotante l'insert de presse (10, 110, 210, 310, 410, 510) à la mâchoire de presse d'entraînement (30, 130, 230, 330) et
- **en ce que** les moyens de transmission de force (22, 222, 322) et les éléments de transmission de force (42, 242, 342) sont disposés au moins de manière prédominante, de préférence complètement dans une zone située entre le milieu du contour de presse (14, 114, 214) et les moyens d'articulation (16, 116, 216, 250, 316).

2. Mâchoire de presse (2, 302) selon la revendication 1,
**caractérisée**
- **en ce que** les moyens de transmission de force (22, 222, 322) sont conçus sous la forme de surfaces d'appui (22a, 22b, 222a, 222b),
- **en ce que** les éléments de transmission de force (42, 242, 342) sont conçus sous la forme de surfaces d'appui (42a, 42b, 242a, 242b) et
- **en ce que** les surfaces d'appui (22a, 22b, 222a, 222b) font, par paires, un angle (α) les unes avec les autres supérieur à 10°, de préférence supérieur à 25°, en particulier supérieur à 40°, de manière particulièrement préférée supérieur à 80°.

3. Mâchoire de presse (2, 302) selon la revendication 1 ou la revendication 2, **caractérisée**
**en ce que** l'insert de presse (10, 110, 310, 410, 510) et les moitiés de mâchoire de presse d'entraînement (32a, 32b, 332a, 332b) sont pivotants autour d'un même axe (4a).

4. Mâchoire de presse (102, 202) selon l'une des revendications 1 à 3,
**caractérisée**
**en ce que** l'insert de presse (10, 210) et les moitiés de mâchoire de presse d'entraînement (132a, 132b, 232a, 232b) sont pivotants autour d'axes différents (4b, 6a, 6b, 6c), dans laquelle les moitiés de mâchoire de presse d'entraînement (132a, 132b, 232a, 232b) présentent un même axe (6a) ou des axes distincts (6b, 6c).

5. Mâchoire de presse (2, 102, 202) selon l'une des revendications 1 à 4,
**caractérisée**
- **en ce que** les moyens d'accouplement (18, 218) comprennent des tiges d'accouplement (18a, 18b, 218a, 218b) avec des extrémités de tête (24a, 24b, 224a, 224b) et
- **en ce que** les éléments d'accouplement (38, 238) comprennent des rainures en T partiellement ouvertes (38a, 38b, 238a, 238b) et reçoivent les moyens d'accouplement (18, 218).

6. Mâchoire de presse (302) selon l'une des revendications 1 à 4,
**caractérisée**
- **en ce que** les éléments d'accouplement (338) comprennent des tiges d'accouplement (338a, 338b) et
- **en ce que** les moyens d'accouplement (318) comprennent des évidements (318a, 318b) et reçoivent les éléments d'accouplement (338).

7. Mâchoire de presse (2, 102, 202, 302) selon l'une des revendications 1 à 6, **caractérisée**
**en ce que** l'insert de presse (10, 110, 210, 310, 410, 510) est conçu selon l'une des revendications 15 à 22.

8. Mâchoire de presse (2, 102, 202, 302) selon l'une des revendications 1 à 7, **caractérisée**
**en ce que** la mâchoire de presse d'entraînement (30, 130, 230, 330) est conçue selon l'une des revendications 9 à 14.

9. Mâchoire de presse d'entraînement (30, 130, 230, 330) pour une compression de raccords avec des tubes au moyen d'un insert de presse (10, 110, 210, 310, 410, 510),
- avec deux moitiés de mâchoire de presse d'entraînement (32a, 32b, 132a, 132b, 232a, 232b, 332a, 332b),
- avec des éléments d'articulation (36, 236) pour la liaison des moitiés de mâchoire de presse d'entraînement (32a, 32b, 132a, 132b, 232a, 232b, 332a, 332b),
- avec des éléments d'accouplement (38, 238, 338) pour la liaison libérable à un insert de presse (10, 110, 210, 310, 410, 510) et
- avec des éléments de transmission de force (42, 242, 342),
- dans laquelle les éléments d'articulation (36, 236) permettent un pivotement des moitiés de mâchoire de presse d'entraînement (32a, 32b, 132a, 132b, 232a, 232b, 332a, 332b) autour d'un axe commun (4a, 6a) ou autour de deux axes différents (6b, 6c),
**caractérisée**
- **en ce que** des éléments de liaison (52, 252) sont prévus pour la liaison pivotante de l'insert de presse (10, 110, 210, 310, 410, 510) et
- **en ce que** les éléments de transmission de force (42, 242, 342) sont disposés au moins de manière prédominante, de préférence complètement dans une zone située entre le milieu du contour de presse (12, 114, 214) de l'insert de presse (10, 110, 210, 310, 410, 510) à relier et les moyens d'articulation (16, 116, 216, 250, 316) de l'insert de presse (10, 110, 210, 310, 410, 510) à relier.

10. Mâchoire de presse d'entraînement (30, 130, 230, 330) selon la revendication 9,
**caractérisée**
- **en ce que** les éléments de transmission de force (42, 242, 342) sont conçus sous la forme de surfaces d'appui (42a, 42b, 242a, 242b) et
- **en ce que** les surfaces d'appui (42a, 42b, 242a, 242b) font un angle (α) les unes avec les autres supérieur à 10°, de préférence supérieur à 25°, en particulier supérieur à 40°, de manière particulièrement préférée supérieur à 80°.

11. Mâchoire de presse d'entraînement (30, 330) selon la revendication 9 ou la revendication 10,
**caractérisée**
**en ce que** les éléments de liaison (52) et les éléments d'articulation (36) présentent un même axe (4a) (axe de rotation).

12. Mâchoire de presse d'entraînement (130, 230) selon l'une des revendications 9 à 11,
**caractérisée**
**en ce que** les éléments de liaison (252) et les éléments d'articulation (236) présentent des axes différents (4b, 6a, 6b, 6c), dans laquelle les éléments d'articulation (236) permettent un pivotement des moitiés de mâchoire de presse d'entraînement (132a, 132b, 232a, 232b) autour d'un axe commun (6a) ou autour d'axes différents (6b, 6c).

13. Mâchoire de presse d'entraînement (30, 130, 230) selon l'une des revendications 9 à 12,
**caractérisée**
- **en ce que** les éléments d'accouplement (38, 238) comprennent des rainures en T partiellement ouvertes (38a, 38b, 238a, 238b) pour la réception libérable de moyens d'accouplement (18, 218) de l'insert de presse (10, 110, 210) et
- **en ce que** les éléments de transmission de force (42, 242, 342) sont conçus sous la forme de surfaces d'appui (42a, 42b, 242a, 242b).

14. Mâchoire de presse d'entraînement (330) selon l'une des revendications 9 à 12,
**caractérisée**
**en ce que** les éléments d'accouplement (338) comprennent des tiges d'accouplement (338a, 338b).

15. Insert de presse (10, 110, 210, 310, 410, 510) pour une compression de raccords avec des tubes,
- avec au moins deux segments de presse (12a, 12b, 112a, 112b, 212a, 212b, 312a, 312b),
- avec des contours de presse (14, 114, 214) constitués dans les segments de presse (12a, 12b, 112a, 112b, 212a, 212b, 312a, 312b),
- avec des moyens d'articulation (16, 116, 216, 250, 316) pour la liaison des segments de presse (12a, 12b, 112a, 112b, 212a, 212b, 312a, 312b),
- avec des moyens d'accouplement (18, 218, 318) pour la liaison libérable à une mâchoire de presse d'entraînement (30, 130, 230, 330) et
- avec des moyens de transmission de force (22, 222, 322),
**caractérisé**
- **en ce que** les segments de presse (12a, 12b, 112a, 112b, 212a, 212b, 312a, 312b) comprennent des moyens de fixation (28, 128, 228, 328) pour la fixation d'une mâchoire de traction (60).

16. Insert de presse (10, 110, 210, 310, 410, 510) selon la revendication 15, **caractérisé**
**en ce que** les moyens de fixation (28, 128, 228, 328) sont conçus sous la forme de cavités (28a, 28b, 128a, 128b, 228a, 228b, 328a, 328b) dans les segments de presse (12a, 12b, 112a, 112b, 212a, 212b, 312a, 312b) pour la réception de moyens de traction (74a, 74b, 374a, 374b) de la mâchoire de traction (60).

17. Insert de presse (10, 110, 210, 310, 410, 510) selon la revendication 15 ou la revendication 16,
**caractérisé**
**en ce que** les cavités (28a, 28b, 128a, 128b, 228a, 228b) permettent une fixation des moyens de traction (74a, 74b, 374a, 374b) selon au moins deux, de préférence plusieurs angles distincts par rapport à l'axe du tube à comprimer.

18. Insert de presse (10, 110, 210, 310, 410, 510) selon l'une des revendications 15 à 17,
**caractérisé**
**en ce que** les moyens d'articulation (16, 116, 216, 250, 316) permettent un montage pivotant de l'insert de presse (10, 110, 210) sur une mâchoire de presse d'entraînement (30, 130, 230, 330).

19. Insert de presse (10, 110, 210, 310, 410, 510) selon l'une des revendications 15 à 18,
**caractérisé**
**en ce que** les moyens de transmission de force (22, 222, 322) sont conçus sous la forme de surfaces d'appui (22a, 22b, 222a, 222b).

20. Insert de presse (10, 110, 210) selon l'une des revendications 15 à 19, **caractérisé**
- **en ce que** les moyens d'accouplement (18, 218) comprennent des tiges d'accouplement (18a, 18b, 218a, 218b) et
- **en ce que** les tiges d'accouplement (18a, 18b, 218a, 218b) sont pourvues d'extrémités de tête (24a, 24b, 224a, 224b).

21. Insert de presse (310, 410, 510) selon l'une des revendications 15 à 19, **caractérisé**
- **en ce que** les moyens d'accouplement (318) comprennent des évidements (318a, 318b) pour la réception libérable d'éléments d'accouplement (338) de la mâchoire de presse d'entraînement (330).

22. Insert de presse (10, 110, 210, 31, 410, 510) selon l'une des revendications 15 à 21,
**caractérisé**
**en ce qu'**un ressort élastique (48, 248) est prévu pour la fermeture des segments de presse (12a, 12b, 112a, 112b, 212a, 212b).

23. Système (100, 400) pour une compression de raccords avec des tubes,
- avec au moins deux inserts de presse (10, 110, 210, 310, 410, 510) et
- avec une mâchoire de presse d'entraînement (30, 130, 230, 330),
- dans lequel les inserts de presse (10, 110, 210, 310, 410, 510) comprennent :
- au moins deux segments de presse (12a, 12b, 112a, 112b, 212a, 212b, 312a, 312b),
- des contours de presse (14, 114, 214, 314, 414, 514) constitués dans les segments de presse (12a, 12b, 112a, 112b, 212a, 212b, 312a, 312b),
- des moyens d'articulation (16, 116, 216, 250, 316) pour la liaison des segments de presse (12a, 12b, 112a, 112b, 212a, 212b, 312a, 312b),
- des moyens d'accouplement (18, 218, 318) pour la liaison libérable à la mâchoire de presse d'entraînement (30, 130, 230, 330) et
- des moyens de transmission de force (22, 222, 322),
- dans lequel les au moins deux inserts de presse (10, 110, 210, 310, 410, 510) comprennent des contours de presse (14, 114, 214, 314, 414, 514) distincts et
- dans lequel la mâchoire de presse d'entraînement (30, 130, 230, 330) comprend :
- deux moitiés de mâchoire de presse d'entraînement (32a, 32b, 132a, 132b, 232a, 232b, 332a, 332b),
- des éléments d'articulation (36, 236) pour la liaison des moitiés de mâchoire de presse d'entraînement (32a, 32b, 132a, 132b, 232a, 232b, 332a, 332b),
- des éléments d'accouplement (38, 238, 338) pour la liaison libérable à l'insert de presse (10, 110, 210, 310, 410, 510) et
- des éléments de transmission de force (42, 242, 342),
**caractérisé**
- **en ce qu'**au moins un insert de presse (10, 110, 210, 310, 410, 510) comprend des moyens de fixation (28, 128, 228, 338) pour la fixation d'une mâchoire de traction (60),
- **en ce qu'**un insert de traction (70, 370) est prévu et comprend :
- deux moitiés d'insert de traction (72a, 72b),
- des moyens d'articulation (76, 376) pour la liaison des moitiés d'insert de traction (72a, 72b, 372a, 372b),
- des moyens d'accouplement (78, 378) pour la liaison libérable à la mâchoire de presse d'entraînement (30, 130, 230, 330) et
- des moyens de transmission de force (82, 382) et
- des moyens de traction (74a, 74b, 374a, 374b) constitués à l'opposé des moyens d'articulation (76, 376),
- dans lequel les moyens d'accouplement (78, 378) et les moyens de transmission de force (82, 382) sont disposés au niveau de la face externe des moitiés d'insert de traction (72a, 72b, 372a, 372b), et
- **en ce que** l'insert de traction (70, 370) et la mâchoire de presse d'entraînement (30, 130, 230, 330) forment la mâchoire de traction (60).

24. Système (100, 400) selon la revendication 23,
**caractérisé**
**en ce que** les moyens de traction (74a, 74b, 374a, 374b) permettent une fixation dans les moyens de fixation (28, 128, 228, 338) selon au moins deux, de préférence plusieurs angles distincts par rapport à l'axe du tube à comprimer.

25. Système (100, 400) selon la revendication 23 ou la revendication 24,
**caractérisé**
**en ce que** la mâchoire de presse d'entraînement (30, 130, 230, 330) est conçue selon l'une des revendications 9 à 14 et/ou
**en ce que** l'insert de presse (10, 110, 210, 310, 410, 510) est conçu selon l'une des revendications 15 à 22.
